(19)

**Europäisches Patentamt**
**European Patent Office**
**Office européen des brevets**

(11) **EP 2 101 230 B1**

(12) **EUROPÄISCHE PATENTSCHRIFT**

(45) Veröffentlichungstag und Bekanntmachung des Hinweises auf die Patenterteilung:
**07.11.2012  Patentblatt 2012/45**

(51) Int Cl.:
*G05B 19/042* (2006.01)     *F24C 7/08* (2006.01)

(21) Anmeldenummer: **08004702.0**

(22) Anmeldetag: **13.03.2008**

(54) **Verfahren zum Bereitstellen eines intelligenten Mensch-Maschinen-Interfaces bei Gargeräten**

Method for creating an intelligent human-machine interface for cooking devices

Procédé destiné à la préparation d'interfaces homme-machine intelligentes dans des appareils de cuisson

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(43) Veröffentlichungstag der Anmeldung:
**16.09.2009  Patentblatt 2009/38**

(73) Patentinhaber: **Rational AG**
**86899 Landsberg/Lech (DE)**

(72) Erfinder:
• **Greiner, Michael, Dr.**
  **86899 Landsberg (DE)**
• **Hömme, Regina**
  **86152 Augsburg (DE)**
• **Kling, Judith**
  **86899 Landsberg a. Lech (DE)**
• **Wiedemann, Peter**
  **86836 Klosterlechfeld (DE)**
• **Seemüller, Simon**
  **86825 Bad Wörishofen (DE)**
• **Jürgens, Andrea**
  **85551 Kirchheim (DE)**
• **Schuller, Erwin**
  **82515 Wolfratshausen (DE)**

• **Schühler, Bernhard**
  **86845 Grossaitingen (DE)**
• **Dietmayer, Cornelia**
  **86947 Weil (DE)**
• **Dobos, Laszlo**
  **85253 Erdweg/Hof (DE)**
• **Breunig, Manfred**
  **86956 Schongau (DE)**
• **Steinhofer, Ingrid**
  **80333 München (DE)**

(74) Vertreter: **Weber-Bruls, Dorothée et al**
**Jones Day**
**Nextower**
**Thurn-und-Taxis-Platz 6**
**60313 Frankfurt am Main (DE)**

(56) Entgegenhaltungen:
**EP-A- 1 528 464      EP-A- 1 624 689**
**EP-A- 1 758 000      WO-A-01/12039**
**WO-A-2004/099673    WO-A-2007/027621**
**DE-A1- 10 103 948    DE-A1- 10 236 960**
**DE-A1- 10 300 465    US-B1- 6 400 996**
**US-B1- 7 057 142**

EP 2 101 230 B1

## Beschreibung

Die Erfindung betrifft ein Verfahren zum Bereitstellen eines intelligenten Mensch-Maschinen-Interfaces bei Gargeräten.

Gargeräte für professionelle und kommerzielle Anwendungen zeichnen sich zunehmend durch eine große Anzahl von Möglichkeiten aus, dem Anwender einen Einfluss auf die Steuerung von Garprogrammen zu eröffnen und damit das Garergebnis zu beeinflussen. Gleichzeitig wird versucht, die Bedienbarkeit solcher Gargeräte zu vereinfachen, um auch weniger versiertem Personal die Möglichkeit zu geben, mit diesen Gargeräten arbeiten zu können. Die Gratwanderung, die sich daraus ergibt, dass einerseits die Bereitstellung zusätzlicher Optionen für den Anwender zu einer komplexeren Bedienbarkeit des Gargeräts führt und andererseits eine Vereinfachung der Bedienbarkeit häufig zu einer Reduzierung der Möglichkeiten des Anwenders führt, das Ergebnis eines Garprogramms zu beeinflussen, stellt eines der zentralen Probleme bei der Verbesserung solcher Gargeräte dar.

Die DE 103 00 465 A1 beschreibt ein Garverfahren, bei dem eine Clusteranalyse angewendet wird. Mit dem Clusterverfahren werden die vielen Parameter, die beim Garen zu beachten sind, auf wenige Schlüsselgrößen reduziert. Durch die so erfolgte Reduzierung von Datenmengen können selbst komplexe Zusammenhänge analysiert und zur Steuerung von Garprogrammen verwendet werden. Eine Auswertung des Anwenderverhaltens ist jedoch nicht vorgesehen.

Aus der EP 1 758 000 A1 ist ein Gargerät mit automatischen Garprogrammen bekannt, die mit einem Verfahren auf der Grundlage von Anwendereingaben konfigurierbar sind. Dabei wird es einem Anwender ermöglicht, sein Gargerät gezielt durch Einstellen einzelner Parameter oder global durch eine Sprachauswahl an seine persönlichen Ansprüche oder als allgemein geeignet vorausgesetzte Ansprüche anzupassen. Nachteilig ist hieran, dass der Anwender im ersten Fall gezielt in vorgegebene Garprogramme eingreifen und dazu umfassende Kenntnisse zu Garparametern haben muss. Dies ist gerade bei komplexeren Gargeräten wie z. B. Kombidämpfern kaum zu realisieren, da diese über eine Vielzahl von unterschiedlichen Garparametern (Garraumtemperatur, Feuchte im Garraum, Lüftergeschwindigkeit, Kerntemperatur und Zeit) gesteuert werden und so eine zeitraubende Eingabeprozedur erzwingen, die von einem normalen Anwender aufgrund der Komplexität der Zusammenhänge kaum bewältigt werden kann. Für den Fall einer Sprachauswahl können nur bestimmte, vorher definierte Sätze von Garprogrammen durch den Anwender modifiziert werden, wodurch spezifischere Wünsche des Anwenders unberücksichtigt bleiben.

Aus der EP 0 285 056 B1 ist ein Übertragungssystem für einen Kochrechner bekannt, bei dem sich eine Vielzahl von Gargeräten über eine zentrale Station auslesen und steuern lassen. Zur Verarbeitung der Daten wird jedoch ein Anwender benötigt, der gegebenenfalls Garparameter in ferngesteuerten Gargeräten anpasst. Eine automatisierte Einstellung der Gargeräte oder eine anwenderspezifische Einstellung der einzelnen Gargeräte ist nicht vorgesehen.

Die EP 1 605 730 A1 beschreibt ein Verfahren zur Automatisierung eines Garprozesses unter Anwendung eines stochastischen Verfahrens bei Verwendung einer periodischen Abfrage der Garguttemperatur. Dabei werden verschiedene Rezepte, denen ein Wahrscheinlichkeitsübergangsparameter aus einer Wahrscheinlichkeitsrechnung zugeordnet wird, in einem elektronischen Register geordnet. Basierend auf der Wahrscheinlichkeitsrechnung wird der Garprozess mit Hilfe einer stochastischen Simulation berechnet. Nachteilig ist hieran, dass Garvorgänge im wesentlichen keine nicht linearen chaotischen Prozesse sind, so dass Wahrscheinlichkeitsrechnungen nicht gut geeignet sind, um solche Garprozesse zu steuern oder vorauszuberechnen.

Die WO 2007/027621 A1 offenbart ein System, das einen Gargeräte-Nutzer beim Eingeben bestimmter Kochinformationen unterstützt, wobei eine fest vorgegebene Menüstruktur zum Einsatz kommt.

Eine biometrische Anwendererkennung von Hausgerätebenutzern ist aus der DE 101 03 948 A1 bekannt. Dabei kann durch einen Fingerabdruck eine Zusatzinformation in Form individueller Einstellungen aktiviert werden.

In der US 7,057,142 B1 ist ein Ofenkontrollsystem mit einer Führung durch unterschiedliche Menüebenen bekannt.

Aus der WO 01/12039 A2 ist ein Verfahren zur Bereitstellung eines an die individuellen Verbraucherwünsche angepassten Getränks bekannt. Dabei kann der Verbraucher die Auswahl der Getränkeart und verschiedene Eigenschaften davon aufgrund seiner geschmacklichen Vorlieben anpassen.

Die US 5,875,430 beschreibt ein intelligentes Netzwerk für kommerzielle Küchen, bei dem eine Vielzahl von Gargeräten mit einem Kommunikationssystem verbunden ist. Dabei wird auch ein gattungsgemäßes Verfahren beschrieben, bei dem die Gargeräte Daten zu Arbeitsbedingungen über eine Datenverbindung an ein Kontrollzentrum senden und dabei Informationen über eine Reparaturbedürftigkeit, kombiniert mit passenden Aufträgen zur Reparatur, einschließlich Rechnungsstellung, weiterleiten. Aufgrund der Diagnose durch das Kontrollzentrum können auch Kochprofile eines spezifischen Gargeräts modifiziert werden. Nachteilig ist hieran, dass lediglich Fehlfunktionen der Gargeräte erkannt und entsprechende Reparaturmaßnahmen eingeleitet werden können. Eine Verbesserung der Ergebnisse im Normalbetrieb der Gargeräte ist durch dieses Verfahren also nicht möglich.

Im allgemeinen sind unterschiedliche Mensch-Maschinen-Interfaces bekannt, siehe zum Beispiel die US 6,400,996 B1 und EP 1 528 464 A2. Ein Multimediaverteilungssystem ist in der EP 1 624 689 A1 beschrieben.

Der vorliegenden Erfindung liegt also die Aufgabe zugrunde, ein Verfahren zum Bereitstellen eines intelligenten Mensch-Maschinen-Interfaces bei Gargeräten zu liefern, das ein einfaches und in der Bedienung durch den Anwender möglichst unaufwendiges Verfahren bereitstellt, mit dem das Mensch-Maschinen-Interface des Gargeräts an einzelne Anwender spezifisch angepasst werden kann.

Diese Aufgabe wird durch die Merkmale von Anspruch 1 gelöst.

Bevorzugte erfindungsgemäße Verfahren sind in den Ansprüchen 2 bis 23 beschrieben.

Schließlich betrifft die Erfindung noch ein Gargerät zum Durchführen eines erfindungsgemäßen Verfahrens.

Der Erfindung liegt somit die überraschende Erkenntnis zugrunde, dass es durch ein Auswerten von Daten, die gewonnen werden aus Anwendereingaben zur Einstellung einer Anzeigeeinrichtung des Gargeräts, möglich ist, eine Verbesserung der Menüführung des Bedienmenüs anwenderspezifisch zu erreichen, indem die Daten zur Klassifizierung des Anwenders oder von Arbeitsprogrammen verwendet werden und aufgrund dieser Klasseneinordnung eine Änderung des Bedienmenüs erfolgt. Durch die Anpassung des Bedienmenüs wird erreicht, dass sich die Bedienbarkeit des Gargeräts für den Anwender verbessert.

Die Verwendung von Klasseneinordnungen ist hierfür von Vorteil, da sich so eine Änderung des Bedienmenüs aufgrund einer Eingabe eines Anwenders auch auf andere Bereiche des Bedienmenüs übertragen lässt. Somit muss die Änderung nicht für jedes Arbeitsprogramm einzeln durchgeführt werden, sondern die Änderung kann für die gesamte Arbeitsprogrammklasse durchgeführt werden. Eine Klasseneinordnung des Anwenders führt analog dazu, dass eine Änderung des Bedienmenüs durch den Anwender auf andere Änderungen des Bedienmenüs übertragen wird, die für Anwender dieser Klassifizierung typisch sind. Durch diese Maßnahmen ist eine effizientere, schnellere und einfachere Anpassung des gesamten Bedienmenüs möglich.

Eine zusätzliche Optimierung kann dadurch erreicht werden, dass eine intelligente Verarbeitung der gesammelten Daten erfolgt und/oder nach dem Ablauf eines Arbeitsprogramms, wie eines Gar- oder Reinigungsprogramms, dem Anwender die Möglichkeit gegeben wird oder er gezielt dazu aufgefordert wird, das gerade abgelaufene Programm zu beurteilen.

Zur Auswertung sind beispielsweise die historischen Betriebsdaten des Gargeräts geeignet (Heizdauer einer Heizeinrichtung, Betriebsstunden eines Dampfgenerators, Anzahl und Dauer angewählter Betriebsarten, Garraumtemperaturen, Umdrehungsgeschwindigkeit und Betriebsdauer eines Lüfterrads, Häufigkeit und Intensität der Benutzung einer Beschwadungseinrichtung und einer Ablöscheinrichtung, usw.). Ebenso ist das Nutzungsverhalten des Anwenders auswertbar. Dazu zählt insbesondere, welche Programme wie oft angewählt wurden und wie oft diese bis zum Abschluss durchgelaufen sind, welche Eingaben und Betriebsarten typischerweise unmittelbar nach den verschiedenen Garprogrammen angewählt wurden, welche Gargüter und Lebensmittelgruppen überwiegend zubereitet wurden, welche Arten von selbst programmierten Garprogrammen wie häufig eingesetzt wurden, welche manuellen Einstellungen bei den vorgegebenen und bei selbst programmierten Garprogrammen verwendet wurden, wie häufig Hilfefunktionen bei welchen verschiedenen Betriebszuständen des Gargeräts aufgerufen wurden, wie oft und welche Reinigungsprogramme angewählt und durchgeführt wurden und mit welchen Einstellungen/Settings die Automatikprogramme verwendet wurden. Auch der zeitliche Verlauf solcher Daten und die zeitliche Gruppierung der Daten bezogen auf z. B. die Tageszeit, Jahreszeit und im Laufe des Lebenszyklus des Gargeräts kann aufgenommen und ausgewertet werden.

Die ausgewerteten und gruppierten Daten können im Anschluss für unterschiedliche Zwecke eingesetzt werden. So ist es beispielsweise möglich, die Daten Vertriebsmitarbeitern zur Verfügung zu stellen. Dazu kann die Auswertung z. B. die verschiedenen Anwender anhand der Daten klassifizieren bzw. clustern. Durch eine solche Clusterung kann der Vertriebsmitarbeiter dem Anwender auf ihn zugeschnittene Angebote unterbreiten, z. B. ihm geeignetes Zubehör anbieten. Wird also beispielsweise festgestellt, dass der Anwender häufig kurze Garprogramme bei sehr hohen Temperaturen einsetzt und häufig Grillprogramme als automatische Garprogramme verwendet, ist es nahe liegend, ihm Grillzubehör, z. B. einen Grillrost, anzubieten.

Neben dem Weiterleiten von ausgewerteten Daten an einen Vertriebsmitarbeiter ist es auch denkbar, dass das Gargerät selbst entsprechende Vorschläge auf einer Anzeigeeinrichtung des Gargeräts graphisch und/oder alphanumerisch darstellt, z. B. dem Anwender in Textform den Kauf oder die Verwendung eines Zubehörs insbesondere zusammen mit einer Preisempfehlung vorschlägt. Dazu ist es sinnvoll, dass das Gargerät Informationen über das bereits gekaufte Zubehör entweder durch die Eingabe eines Vertriebsverantwortlichen oder Servicetechnikers, insbesondere in Form eines Softwareupdates, erhält. Die Informationen können auch online zur Verfügung gestellt bzw. durch das Gargerät abgerufen werden. Die Zubehörteile können ebenso durch eine geeignete Signatur (z. B. Strichcode, RFID) mit entsprechenden Sensoren im Gargerät erkannt werden. Auch können im Rahmen einer automatisierten Beratung durch das Gargerät die besonderen Vorzüge des Gargeräts dem Anwender dargestellt werden. Im Allgemeinen ist es dazu zweckmäßig, die Daten während der Auswertung zu verdichten und zeitlich zu ordnen. Hierdurch lassen sich die Bedürfnisse und Gewohnheiten der Anwender besser berücksichtigen. Auch ist es so möglich, dem Anwender Einsparpotenziale aufzuzeigen, beispielsweise durch eine Visualisierung des zeitlichen Verlaufs der Nutzung seines Gargeräts. So sind beispielsweise die Auswirkungen durch einen Personalwechsel (Nutzung, Leerlaufzeit, Stillstandszeiten, Reinigungsverhalten) und/oder die Einführung neuer Abläufe wie (Finishing, Übernacht Garen oder andere automatische Garprogramme) leicht aufzuzeigen.

Die Auswertung der Daten kann dabei völlig unterschiedlich sein. In einem Cluster kann beispielsweise ausgewertet werden, wie oft Geflügel gegart wurde, woraus sich ggf. ein Bedarf für Zubehör, das zum Garen von Hähnchen geeignet ist, ergibt. Bei einer häufigen Anwendung von Garprogrammen für Kurzgebratenes käme als Zubehör eine Grill-, eine Pizzaplatte oder ähnliches Grillzubehör in Frage; werden häufig Backprogramme angewendet, könnten für den Anwender Backbleche hilfreich sein. Ebenso kann aber umgekehrt, wenn der Anwender bestimmte Garprogramme nicht anwählt, er über diese Garprogramme entsprechend informiert werden, damit er die Möglichkeit, diese anzuwenden, in Betracht ziehen kann.

Die so aufgenommenen und ausgewerteten Daten können dem Anwender auch für eigene Rückschlüsse angezeigt werden. So kann es für den Anwender beispielsweise hilfreich sein, sich den zeitlichen Verlauf der Nutzungsstunden des Gargeräts in den verschiedenen Betriebsarten geordnet nach bestimmten Zeiträumen anzeigen zu lassen, um die Auslastung und Effizienz seiner Arbeitsabläufe zu kontrollieren und gegebenenfalls über den Kauf eines weiteren oder spezielleren Gargeräts sachgerecht urteilen zu können. Dabei ist z. B. die Anordnung der Daten in Monatswerten, Quartalswerten oder Jahreswerten besonders interessant, um die entsprechenden Änderungen im Vergleich zu Vormonatswerten, vorherigen Quartalswerten oder Vorjahreswerten aufzeigen zu können. Auch ist es denkbar, die am häufigsten angewählten Garprogramme in Form einer Rangliste anzuzeigen.

Im Folgenden werden anhand von Ausführungsbeispielen verschiedene erfindungsgemäße Auswertmöglichkeiten erläutert.

## I. Anwenderklassifizierung

Zur Erstellung eines Anwenderprofils kann eine Vielzahl von typischen Anwendungs- bzw. Verhaltensmustern, die über die Eingabeeinrichtung am Gargerät oder die Betriebsabläufe des Gargeräts erkannt werden, ausgewertet werden. Eine mögliche Klassifizierung ist in der folgenden Tabelle ausgeführt:

Tabelle 1: Mögliche Zuordnungen und Klassifizierungen/Clusterungen eines Anwenderverhaltens auf der Grundlage von Eingaben eines Anwenders und der Nutzung eines Gargeräts.

| | |
|---|---|
| 1 | Nur manuelle Bedienung (Manueller Anwender) |
| 2 | Nutzt viel oder nur eigene Programme (versierter Anwender) |
| 3 | Nutzt viele Bratenprogramme und Delta-T Garen (Metzger) |
| 4 | Nutzt nur oder viele Backprogramme insbesondere mit Gärprogrammschritten (Bäcker) |
| 5 | Bedienkonzept der Automatikprogramme wird zielgerichtet befolgt (geschultes Personal) |
| 6 | Häufig und viele Änderungen |
| 7 | Nutzt viel Nachtgarung und andere Garprogramme mit langer Laufzeit (Intensiver Anwender) |
| 8 | Langer Leerlaufbetrieb mit unbeladenem Garraum, heizt sehr lange vor (Energieverschwender) |
| 9 | Häufige Passwortnutzung (hohes Sicherheits- und eventuell Qualitätsbewusstsein) |
| 10 | Hilfetexte werden häufig benutzt (Anwender ist für Anregungen offen und eventuell schlecht geschult) |
| 11 | Häufiges Abbrechen von Garprogrammen und häufige Türöffnung (ungeduldiger Anwender) |
| 12 | Finishing-Programme werden häufig genutzt (Anwender, bei dem viele Gerichte zeitgleich fertig werden müssen) |
| 13 | Regelmäßige und häufige Reinigung und/oder Verwendung intensiver Reinigungsprogramme (sorgfältiger, hygienebewusster Anwender) |

(fortgesetzt)

| 14 | Aufgezeichnete HACCP-Daten (Hazard Analysis of Critical Control Points) werden häufig ausgelesen (kontrollierender Anwender) |
| --- | --- |
| 15 | Frittierprogramme werden häufig angewendet (Anwender benötigt viele frittierte Produkte) |
| 16 | Spezialfunktionen und Garprogramme für Sousvide werden häufig genutzt (Sousvide-Anwender) |
| 17 | Startzeitvorwahl wird häufig genutzt und/oder das Gargerät ist sehr häufig in Betrieb |
| 18 | Die Zwangsreinigung wird genutzt |
| 19 | Die Vernetzung mehrerer Gargeräte wird häufig genutzt (Anwender plant seine Küchenabläufe genau) |
| 20 | Zu bestimmten Zeiten, Jahreszeiten oder Terminen wird das Gerät intensiver genutzt (Anwender hat ein ausgeprägtes Saisongeschäft) |
| 21 | Gerät wird nur im Heißluftmodus oder nur im Dampfmodus betrieben (Anwender verwendet das Gargerät nur als Umluftofen oder als Dämpferersatz) |
| 22 | Anhand der Art des Tagesablaufs und der Gerätegröße kann die Art des Betriebs des Anwenders erkannt werden (morgens backen, vormittags garen und abends Finishing wäre für eine Hotelküche typisch) |
| 23 | Auswertung der Auswahl der automatischen Garprogramme (z. B. Anwender bietet hauptsächlich traditionelle Küche oder moderne Küche an) |
| 24 | Gargerät ist viel online und wird regelmäßig mit Updates versorgt (innovationsfreundlicher und professioneller Anwender) |
| 25 | Die Bediensprache des Gargeräts wird häufig geändert (wechselnde Anwender mit unterschiedlicher Nationalität) |
| 26 | Charakteristische Betriebsmoden oder Garprogramme werden besonders häufig angewendet (Nationalität der Küche kann erkannt werden, z. B. italienische Art mit viel Heißluftanteil, asiatische Art oder bayrische Küche, weil die Überkrustungsfunktion häufig genutzt wird, usw.) |
| 27 | Gargerät wird hauptsächlich für Fleischgerichte genutzt (Metzger) |
| 28 | Level-Control-Programme werden häufig genutzt (Anwender bietet in kleiner Küche Essen à la carte) |
| 29 | Es werden hauptsächlich Garprogramme, die typisch für Fischgerichte sind, angewendet (Restaurant auf Fischgerichte spezialisiert) |
| 30 | Es werden hauptsächlich Geflügelprogramme gewählt (Geflügelspezialist) |

(fortgesetzt)

| 31 | Nutzung von Kombidämpfer mit niedriger Ausstattungsstufe, bei dem verschiedene Einstellungen häufig geändert werden und angepasst werden (Bedarf für einen Kombidämpfer mit höherer Ausstattung) |
| --- | --- |
| 32 | Nutzt Kerntemperaturfühler häufig (Kerntemperaturfühleranwender) |
| 33 | Mikrowellengenerator wird häufig genutzt (Mikrowellenanwender) |
| 34 | Beschleunigte Garprogramme, häufiges Zuschalten der Mikrowelle (Hochgeschwindigkeitsanwender) |

In Abhängigkeit von der Zuordnung des Anwenders und der Art seines Betriebs können durch das Gargerät gezielte Informationen zu den Potentialen des Gargeräts an den Anwender weitergeleitet werden, und/oder der Vertrieb des Gargeräteherstellers kann über einen möglicherweise vorhandenen Bedarf informiert werden.

Die in Tabelle 1 gezeigten, nicht abschließenden Klassifizierungen/Clusterungen werden tatsächlich anhand von mathematischen Bedingungen überprüft. So wird z. B. die Eigenschaft "nervöser/neugieriger Anwender" anhand einer oder mehrerer Bedingungen ermittelt. Als solche Bedingungen können beispielsweise die Häufigkeit der Verwendung der Zurück-Taste und die Verweildauer in einem Menü, bis die Zurück-Taste betätigt wird, gemessen werden. Ein geeignetes Maß kann auch beispielsweise die Häufigkeit der Verwendung der Zurück-Taste bezogen auf die Dauer, während der ein Anwender in den Bedienmenüs des Gargeräts navigiert, sein. Durch die mathematische Definition von Grenzen und Schwellwerten können dem Anwenderverhalten verschiedene Kennzahlen zugeordnet werden. Die mathematisch formulierten Bedingungen ergeben eine Kennzahl zwischen 0% und 100%. Diese Kennzahlen werden zu einer weiteren Kennzahl gewichtet zusammengeführt. So ergibt sich eine prozentuale Kennzahl für die entsprechende Eigenschaft.

Eine Klassifizierung kann also bereits durch ein einziges Kriterium einer wie auch immer gearteten Auswertung von Daten erfolgen. Als auszuwertende Daten kommen alle Sensordaten des Gargeräts in Frage aber auch alle Eingaben eines Anwenders des Gargeräts. Da dabei auch gerätespezifische Vorgaben berücksichtigt werden können, ist es möglich, dass eine bestimmte Anwenderklassifizierung oder Clusterung tatsächlich nur auf einen einzelnen Anwender bezogen sein kann.

Eine Möglichkeit ist demnach die Auswertung der Benutzung der Zurück-Taste innerhalb eines Zeitraums (pro Tag, Stunde, etc.) oder je gestartetem Arbeitsprogramm. Je häufiger die Zurück-Taste genutzt wird, desto unruhiger oder neugieriger ist der Anwender. Diese beiden Varianten, neugieriger und nervöser Anwender, lassen sich aber im zeitlichen Verlauf durch Auswertung der Häufigkeit solcher Ereignisse mit einer gewissen Wahrscheinlichkeit immer besser voneinander unterscheiden. Der neugierige Anwender wird die Zurück-Taste weniger nutzen, wenn er alles "erforscht" hat, wohingegen der unruhige Anwender sich weiterhin häufig vertippen und sich daher der Zurück-Taste bedienen wird. Dabei können die Kriterien bezüglich der Verwendung der Zurück-Taste wie folgt gesetzt werden:

1. nicht benutzt
2. bis zu zweimal benutzt
3. zwei- bis viermal benutzt
4. öfter als viermal benutzt

Zusätzlich kann ausgewertet werden, wie lange der Anwender in einer Maske zur Eingabe verbleibt, bis er die Zurück-Taste betätigt. Zu den Kriterien werden also auch zeitliche Bewertungen der Ereignisse vorgenommen. Dabei gilt, dass ein neugieriger Anwender tendenziell länger in einer Maske verbleibt, während der nervöse Anwender eine kürzere Zeit verbleiben wird.

Der Übergang zwischen der Klassifizierung neugieriger oder nervöser Anwender wird nicht scharf, sondern gleitend definiert, was sich im Ergebnis anhand einer Aussagewahrscheinlichkeit widerspiegelt (z. B. neugierig 80% / nervös 20%). Ist die zeitliche Bewertung beispielsweise sehr kurz, so kann von einem 100% nervösen und 0% neugierigen Anwender ausgegangen werden. Liegt die Zeitdauer in einem mittleren Bereich kann mittels einer Interpolation mit Hilfe einer mathematischen Gleichung ein Wert zwischen zwei vorher definierten zeitlichen Grenzen ermittelt werden. Dabei kann z. B. eine lineare Funktion für alle Zeitelemente zwischen den Zeitgrenzen verwendet werden, als untere Grenze könnte z. B. to = 3 Sekunden angenommen werden. Für alle sich zwischendurch ergebenden Zeiten t ergäbe sich für das Verhältnis nervöser und neugieriger Anwender die Wertung nach der folgenden Formel:

$$(1) \quad 100\% - t(t-t_0) \times 100\% : (t_1 - t_0) \text{ nervös} / (100\% - \text{Prozentwert nervös}) \text{ neugierig}$$

Aus einer Kombination der Kriterien und der zeitlichen Bewertung von Ereignissen könnte sich beispielsweise für die vier verschiedenen genannten Kriterien die folgende Klassifizierung ergeben:

1. 0% nervös / 0% neugierig
2. Datensatz nach X Zeiträumen: 20% nervös / 10% neugierig
3. Datensatz nach Y Zeiträumen: 50% nervös / 10% neugierig
4. Datensatz nach Z Zeiträumen: 100% nervös / 0% neugierig

Die vier verschiedenen Kriterien führen also zu einer Gewichtung der zeitlichen Bewertung der Ereignisse, während die zeitliche Bewertung das Verhältnis der Wahrscheinlichkeiten für einen neugierigen und einen nervösen Anwender bestimmt.

Zudem werden Rohdaten, wie zur Garraumtemperatur, Feuchtigkeit, Ablöschtemperatur, Türöffnung, Kerntemperatur, usw., durch das Gargerät erfasst. Als Rohdaten kommen aber auch Informationen zum Nutzungsverhalten des Bedienkonzepts des Gargeräts (HACCP-Abfragen, Auswahl der Garprogramme, Spracheinstellungen, Hilfetext, usw.) in Frage, also zur Nutzung von Diagnoseprogrammen und Arbeitsprogrammen. Diese Rohdaten werden bei der Auswertung mittels eines Regelwerks bzw. mit Hilfe von Kriterien bewertet. Als Kriterium kann z. B. das Einschalten einer Betriebsart, das Erreichen von Sollparametern oder eine mangelnde Aktivität des Anwenders verwendet werden. Als Kriterien können beispielsweise die folgenden konkreten Grenzen bei der Bestimmung der Reaktionszeit eines Anwenders eingesetzt werden:

1. kürzer als 10 Minuten
2. länger als 10 Minuten, kürzer als 20 Minuten
3. länger als 20 Minuten, kürzer als 60 Minuten
4. länger als 60 Minuten

Wird das Kriterium 3. erfüllt, so wird ein Zähler bspw. um 1 erhöht, der ein Maß für die Aktivität des Anwenders ist. Der Zähler beinhaltet dann als Kennzahl die Information, wie häufig der Anwender in einem Zeitrahmen zwischen 20 und 60 min keine Aktivität gezeigt hat, nachdem beispielsweise ein bestimmter Sollparameter, wie die Garraumtemperatur, erreicht worden ist.

Stellt ein Anwender ein Garprogramm manuell nach, indem er z. B. bei Gargeräten ohne Programmierfunktion nach einer gewissen Zeit Temperatur oder Zeit verändert, ohne die Tür zu öffnen, kann aufgrund dieses Anwenderverhaltens bzw. Nutzungsverhaltens erkannt werden, dass für einen solchen Anwender ein programmierbares Gargerät geeigneter wäre.

Als weiteres Nutzungsverhalten könnte erkannt werden, dass ein Anwender manuell durch Öffnen der Tür den Garraum des Gargeräts entfeuchtet. Geschieht dies beispielsweise in einem bestimmten zeitlichen Abstand zu anderen Ereignissen und/oder während bestimmter Zeitfenster typischerweise immer gleich, ergibt sich daraus ein wiederkehrendes Muster. Die Zeitdauer der Türöffnung ist von einer Zeitdauer zum Entnehmen des Garguts leicht zu trennen, da direkt nach der Türöffnung und dem Wieder-Verschließen der Tür ein anderer Verlauf der Kerntemperatur und der Garraumtemperatur zu erwarten ist.

Die Liste von Kriterien nach Tabelle 1 ist beliebig erweiterbar. Im Allgemeinen erfolgen die Auswertungen aufgrund von Kriterien hinsichtlich eines zeitlichen Verlaufs, einer Nutzungshäufigkeit, einer Kombination bestimmter Funktionen oder eines bestimmten Profils (z. B. moderne Küche mit bestimmten Produkten und Temperaturen). Nachdem das Regelwerk die Bewertung vorgenommen hat und die Zähler entsprechend hochgezählt werden, erfolgt die Auswertung für den Vertrieb oder die Anzeige auf dem Gargerät. Die Auswertung kann sowohl im Gargerät selbst, als auch im Rechner eines Vertriebsmitarbeiters oder Servicetechnikers oder in einer zentralen Basisstation, mit der die Gargeräte verbunden sind, erfolgen.

Verschiedene Gruppen von Kriterien oder auch teilweise einzelne Kriterien können ausgewertet werden. Eine Kombination einzelner Kriterien erlaubt eine höhere Zuordnungsgenauigkeit zu einer Gruppe. Eine solche Clusterung erfolgt mit allgemein bekannten Clusterverfahren oder durch Prüfung von Zählerständen. Überschreitet ein Zählerstand bestimmte vorgegebene Werte, so erfolgt eine Einstufung. Eine Energieverschwendung ist beispielsweise zwischen

1. geringe Energieverschwendung
2. mittlere Energieverschwendung

(fortgesetzt)

3.      hohe Energieverschwendung

4.      sehr hohe Energieverschwendung

oder übersetzt in eine anwenderfreundlichere Beratungssprache

1.      effiziente Arbeitsweise

2.      Verbesserungspotential

3.      Ersparnisquelle/Einsparmöglichkeiten circa X Euro pro Jahr

4.      große Einsparmöglichkeit mit circa Y Euro pro Jahr

einzuordnen. Je nach Zählerstandbereich der einzelnen Kriterien und Zuordnung zu einem Cluster kann daraus eine Gesamtaussage über das Zutreffen der Kriterien ausgegeben werden. Je höher die Wahrscheinlichkeit des Zutreffens, desto weiter oben in der Liste des Vertriebsmitarbeiters erscheint dieser Punkt oder das Gargerät zeigt entsprechend Vorschläge ab dem Überschreiten gewisser Schwellwerte auf der Anzeigeeinrichtung des Gargeräts an. Dabei kann auch wie folgt gewichtet werden: je höher die Wahrscheinlichkeit des Zutreffens des Kriteriums, desto höher wird es in der Liste des Vertriebsmitarbeiters oder des Gargeräts priori siert.

So können sich z. B. Informationen über die fünf wichtigsten Eigenschaften eines Anwenders wie folgt finden:

1.      versierter Anwender

2.      geschultes Personal

3.      Nutzer der Startzeitvorwahl

4.      Ohne Kerntemperaturfühler-Anwender

5.      Verbesserungspotential bei der Energieeinsparung

Anhand dieser Liste kann der Vertrieb gezielte Argumentationen aufbauen und einen Vergleich zu früheren Zeitperioden vornehmen, um z. B. den Erfolg einer Schulungsmaßnahme oder den Effekt eines neuen Küchenchefs oder Softwareupdates nachzuweisen. Ebenso ist es durch die Anzeige dieser Eigenschaften der Anwender durch das Gargerät den Anwendern selbst möglich, die Effizienz ihres Bedienpersonals zu kontrollieren oder auch selbsttätig Optimierungen beim eigenen Umgang mit dem Gargerät zu überdenken.

Wie bereits geschildert, lassen sich auch ohne eine direkte Abfrage der Wünsche des Anwenders Rückschlüsse auf dessen Wünsche dadurch ziehen, dass eine Analyse des Verhaltens des Anwenders bei Eingabevorgängen erfolgt. Hierzu kommt beispielsweise der Zeitpunkt, die Anzahl und/oder Frequenz des Ein- und Ausschaltens einer Betriebsfunktion des Gargeräts oder die Verwendung eines Zubehörs in Frage. So können Funktionen, die längere Zeit nicht benutzt wurden, ausgeblendet werden. Dadurch wird die Übersichtlichkeit des Bedienmenüs erhöht. Durch die Erkennung der Gewohnheiten des Anwenders und Anpassung des Bedienkonzepts, d. h. Programme bzw. Funktionen werden z. B. auf die oberste Menüebene gelegt oder vergrößert bzw. heller dargestellt, wohingegen andere weniger relevante Funktionen auf untere Menüebenen (z. B. zweite oder dritte Menüebene) verlagert bzw. kleiner oder dunkler dargestellt werden, wird das Gargerät aus Sicht des Anwenders optimiert. Ebenso kann das Tages- bzw. Produktionsende intelligent berechnet werden, um z. B. ein spezifisches Reinigungsprogramm anzubieten oder auch ein solches Programm selbsttätig zu starten und zu beenden.

Die Klassifizierung des Anwenders, seiner spezifischen Vorlieben und/oder seiner Wünsche kann auch für ein vorausschauendes Vorheizen oder Abkühlen des Garraums oder ein Spülen des Dampfgenerators verwendet werden, um dem Anwender lästige Wartezeiten zu ersparen. Aus dem Zeitpunkt des Einschaltens und Ausschaltens von Garprogrammen, Reinigungsprogrammen oder Diagnoseprogrammen können auch Informationen über den Zustand des Gargeräts abgeleitet werden. Dazu ist insbesondere der letzte Einschalt- und Ausschaltzeitpunkt, das Ende und der Anfang der letzten bzw. ersten Betriebsart sowie der Zeitpunkt des Starts der letzten Aktion, wie z. B. Reinigung, Übernacht-Garen oder Startzeitvorwahl, verwendbar. Eine Mittelwertbildung über die Wochentage kann mit dem Ziel durchgeführt werden, ein automatisches Einschalten oder Ausschalten des Gargeräts erfolgen zu lassen oder geeignete Handlungshinweise zu geben. So kann beispielsweise aus dem Verhalten des Anwenders ein für seine Arbeitsabläufe typischer, passender Zeitpunkt gefunden werden, um eine Reinigung zu empfehlen. Neben der Empfehlung an den Anwender kann auch ein automatisiertes Ein- bzw. Ausschalten z. B. eines passenden Reinigungsprogramms durchgeführt werden.

Bei der Veränderung der Voreinstellungen eines Programms kann der Zeitpunkt, die Anzahl und die Frequenz der Veränderungen berücksichtigt werden, wobei die Veränderungen nicht nur eine Veränderung eines Programmparameters umfassen, sondern auch eine Unterbrechung, eine Verkürzung und/oder eine Verlängerung des Garprogramms. So lässt sich der gesamte Verlauf eines Garprogramms anwenderspezifisch verändern. Eine zu schnelle Veränderung der Garprogramme durch ein einmaliges Ereignis bzw. eine einmalige Anwendereingabe oder eine einmalige Interpretation des Anwenderverhaltens kann so ausgeschlossen werden. Es ist beispielsweise möglich, die Korrekturen erst nach einer gewissen Anzahl von Wiederholungen zu übernehmen. Ebenso kann ein Mittelwert der Anzahl der letzten Korrekturen übernommen werden. Diese Korrekturen können dann auch wieder auf andere Garprogramme übertragen werden. So ist es dann möglich, die Voreinstellungen auch bei anderen Garprogrammen beispielsweise auf "durch" zu ändern, wenn in einem oder mehreren Garprogrammen wiederholt die Voreinstellung von "medium" auf "durch" geändert wurde. Wenn einzelne Garprogramme, wie z. B. Krustenbraten, mit anderen Voreinstellungen gespeichert werden, also z. B. immer die gleiche Kerntemperatur und Bräunung, kann diese Voreinstellung im gesamten Mutterprogramm, also z. B. für alle Großbraten, angepasst werden. Wird durch den Einbau eines Katalysators oder das Aufsetzen einer Abzugshaube das Gargerät verändert, können auch die Garprogramme entsprechend angepasst werden. Die Anpassung kann z. B. durch eine Erhöhung der Vorheiztemperatur, eine Verlängerung der Abkühlzeiten oder durch eine Verlängerung von Schrittlaufzeiten erreicht werden. Das Gargerät kann entweder selbständig durch Messung mit dazu geeigneten Sensoren feststellen, welche Umbauten am oder im Gargerät stattgefunden haben, oder diese können durch einen Kundendiensttechniker oder Servicemitarbeiter an der Eingabeeinrichtung des Gargeräts eingegeben werden.

Ein Wechsel der Spracheinstellungen des Gargeräts kann erfolgen, weil Anwender unterschiedlicher Muttersprache mit dem Gargerät arbeiten oder der Anwender regionale Spezialitäten in den jeweiligen Landessprachen ausprobieren möchte, um seine Küche authentischer zu machen. Dies kann daran erkannt werden, dass der Anwender jeweils nur die Landesspezialitäten in der entsprechenden Spracheinstellung anwählt, während die anderen Garprogramme in der ursprünglichen Einstellung ausgewählt werden. Erfolgt die Umstellung der Spracheinstellung nicht nur für einzelne Garprogramme, und werden die gleichen Garprogramme zu unterschiedlichen Zeiträumen in unterschiedlichen Sprachen angewählt, ist hingegen auf unterschiedliche Anwender mit unterschiedlicher Muttersprache zurückzuschließen.

Des Weiteren wird die Dauer einer Türöffnung, einer Programmauswahl, eines Stillstands des Gargeräts, eines Betriebs des Gargeräts und/oder der Reaktionszeit des Anwenders auf eine Handlungsaufforderung, wie z. B. eine Reinigungsaufforderung, Aufruf der Hilfefunktion des Gargeräts, der Fehlerdiagnose des Gargeräts, der Verbrauchswertdiagnose des Gargeräts und dergleichen bestimmt. Auch die historischen Betriebsdaten werden zur Auswertung aufgenommen (Betriebsstunden der einzelnen Betriebsarten, Temperaturverläufe aller Sensoren, wie z. B. die Kerntemperatur, Magnetrontemperatur, Garraumtemperatur, Technikraumtemperatur, sowie der Verlauf der Feuchtewerte, der Ablöschung, der Beschwadung, der Motordrehzahl des Lüfterrads, die Werte der Kalibrierung des Gargeräts, alle Fehlermeldungen und insbesondere die Notlaufzustände des Gargeräts). Auch die Häufigkeit der Anwahl der entsprechenden Betriebsarten und Garprogramme wird gespeichert.

Durch Auswertung der Daten können Türöffnungszeiten, Beschickungsmengen und Kalibergrößen erkannt werden und darauf mit einer Veränderung der Programme und Garprogramme reagiert werden. Bei einer Erkennung der Beschickungsmenge, d. h. einer Lasterkennung, kann ein Vergleich mit historischen Daten durchgeführt werden, um typische Produktionsmuster zu erkennen, z. B. Vollbeschickungen werden nur morgens verwendet, während mittags nur Einzelbeschickungen verwendet werden. Auch ein Leerlaufbetrieb kann so erkannt und das Regelverhalten nach einer gewissen Zeitspanne angepasst werden. So kann es beispielsweise im Leerlaufbetrieb notwendig sein, die Mikrowellentaktung deutlich zu reduzieren, um das Magnetron zu schonen und den Energieverbrauch zu reduzieren.

Die gesammelten Daten über die verwendetet Hardware, das verwendete Gargerät, Zubehör oder dergleichen und/oder die verwendete Software, installierte Updates, die Vernetzung der Gargeräte oder dergleichen können ausgewertet und/oder automatisch an den Kundendienst oder Vertrieb weitergeleitet werden. Beispielsweise wird die Nutzungshäufigkeit zur Clusterung ausgewertet. Auch die Anzahl, die Dauer und die Häufigkeit einer Bedienblendenöffnung z. B. für Servicezwecke können anhand eines Temperaturabfalls an der Platine oder mit Hilfe eines eigens dazu eingebauten Sensors registriert werden. Ebenso können Stromausfälle bzw. deren Zeitpunkt und Dauer und entsprechende Reaktionen, sofern ein wiederkehrendes Muster erkannt wird, vom Gargerät dokumentiert werden.

Werden typische Muster erkannt, so kann, beispielsweise wenn in einem Entwicklungsland der Strom üblicherweise zu einem gewissen Zeitpunkt ausfällt, der Anwender darauf hingewiesen werden, dass, wenn er ein Garprogramm startet, das solange dauert, dass es in den entsprechenden Zeitraum des Stromausfalls hineinreicht, das Garprogramm wahrscheinlich nicht bis zum Ende durchgeführt werden kann. Auch ist es vorstellbar, dass das Gargerät, wenn aufgrund einer Restzeitberechnung erkannt wird, dass das Ende eines angewählten Garprogramms nur knapp in den Zeitraum eines voraussichtlichen Stromausfalls hineinlaufen könnte, das Garprogramm dahingehend anpasst, dass eine Beschleunigung des Garprogramms erfolgt, so dass das Garprogramm vor dem voraussichtlichen Beginn des Stromausfalls beendet werden kann.

Durch eine Erkennung von Ein- bzw. Ausschaltpunkten kann das Geräteverhalten wie folgt intelligent angepasst werden:

1. automatisches Ein- und Ausschalten für eine Zeit- und Stromersparnis

2. automatisches Vorheizen auf eine passende Betriebsart/Temperatur

3. Erstellen von Anzeigen zu geeigneten Zeitpunkten (z. B. Reinigungsaufforderung vor Ausschaltzeitpunkt)

4. Spülen des Dampfgenerators

5. Abkühlung vor Reinigungsprogramm oder einem Garprogramm

Wenn beispielsweise ein Anwender zur Produktionsbeginn jeden Montagmorgen Spiegeleier brät, so erkennt dies das Gargerät an der Auswahl des automatischen Garprogramms für Spiegeleier und kann dies mit dem internen elektronischen Kalender abgleichen. Das Gargerät speichert dies und heizt sich zu gegebener Zeit (automatische Erkennung des Einschaltzeitpunkts) auf die entsprechende Betriebsart vor. D. h., dass das Gargerät selbständig das Garprogramm "Eier-Braten, dünn" auswählt und bereits mit dem Vorheizen beginnt, schon bevor der Anwender dies selbst ausgewählt hat. Gleichzeitig berücksichtigt das Gargerät die üblicherweise durch den Anwender verwendeten Voreinstellungen für das entsprechende Garprogramm.

Manche Garprogramme beinhalten zusätzliche Optionen für den Anwender, deren Verwendung vom Gargerät gespeichert werden kann. Solche Optionen bei Garprogrammen sind z. B. zusätzliches Gären bei Backprogrammen, Umstecken des Kerntemperaturfühlers, wenn verschieden große Gargüter mit dem selben Garprogramm gegart werden sollen, die Option "Einschneiden Überspringen", bei der ein Anwender das Einschneiden eines Krustenbratens während ein automatisches Garprogramm "Krustenbraten" überspringen kann, usw. Je nach Häufigkeit der angewählten Optionen können dabei verschiedene Prioritätsklassen unterschieden werden:

1. Option wird nie angewählt → Option wird gelöscht

2. Option wird selten angewählt → Optionen entfallen nicht vollständig, sondern werden in einem tieferen Untermenü gespeichert

3. Option wird häufig angewählt → als Option beibehalten bzw. gezielt zur Bedienung der Option auffordern und nachfragen

4. Option wird sehr häufig angewählt → Option ist keine Option mehr, sondern wird fest in den Garverlauf eingebaut und muss gegebenenfalls aktiv entfernt werden

Beispielsweise könnte in einem Garprogramm "Übernacht-Braten" stets die Option "Anbraten Überspringen" angewählt werden, weil der Anwender den Großbraten bereits zuvor in einer Pfanne anbrät und somit nicht das Anbraten des automatischen Garprogramms verwenden möchte. In diesem Fall hat der Anwender eventuell eine Kippbratpfanne neben einem Kombidämpfer stehen und brät immer manuell an. Somit kann nach der Erkennung bzw. der Anwenderklassifizierung die Option entfallen und der Anbratschritt automatisch aus dem Garverlauf entfernt werden.

Ein weiteres Beispiel für die Beobachtung von Anwendergewohnheiten ist, dass der Anwender während eines Garprogramms ungefähr immer zur selben Zeit die Tür (bei Kombidämpfern) oder den Deckel (bei Kippbratpfannen) öffnet. Dieses Türöffnen wird automatisch erkannt und der Zeitpunkt der Türöffnung wird in Relation zu den einzelnen Garphasen bzw. zur Garzeit gesetzt. Sobald eine Gesetzmäßigkeit erkannt wurde, wird aus den relevanten gespeicherten Werten ein Mittelwert gebildet. In dem Gargerät ist nun gespeichert, dass die Tür oder der Deckel im Mittel zu einem bestimmten Zeitpunkt geöffnet wird. Bei einem folgenden Garprogramm kann anhand der so erkannten bzw. errechneten Zeit automatisch ein optisches und/oder akustisches Signal in den Garverlauf implementiert werden, das den Anwender darauf hinweist, dass zu dieser Zeit üblicherweise die Tür geöffnet wird. Statt dem Mittelwert kann auch eine gewichtete Mittelwertbildung mit quadratischer Gewichtung durchgeführt werden. Auch können bestimmte Grenzen definiert sein, innerhalb derer die Werte liegen müssen, um zur Mittelwertbildung beizutragen.

Ein solches Anwenderverhalten kann beispielsweise auftreten, wenn der Anwender immer kurz vor Garende eine Marinade auf das Produkt streichen möchte. Er wird dann immer circa 5 Minuten vor dem Ende des Garvorgangs die Tür öffnen. Das Gargerät erkennt als Gesetzmäßigkeit, dass immer circa 5 Minuten vor Garzeitende die Tür geöffnet wird. Nach einer signifikanten Anzahl von Vorgängen wird ein automatisches Signal zum Öffnen der Tür optisch und/oder akustisch immer 5 Minuten vor Ende des Garvorgangs in den Ablauf implementiert. Beim ersten Auftreten des optischen und/oder akustischen Signals kann der Anwender über die Eingabeeinrichtung auch einen Namen, der seiner Meinung nach zu der gegebenen Aufforderung passt, eingeben. So könnte er beispielsweise vorgeben, dass der Text "Marinade Auftragen" zusammen mit dem entsprechenden Signal erscheint.

Eine Mittelwertbildung zur Bestimmung von angepassten Grundeinstellungen der Garprogramme kann auch dann von Interesse sein, wenn der Anwender die Grundeinstellungen nicht immer im gleichen Maß verändert. So ist es möglich, die Grundeinstellungen für einen oder mehrere Garprogramme, die der Anwender verwendet, zu mitteln und den gemittelten Wert als neue Grundeinstellung für das oder die Garprogramme zu verwenden. Des Weiteren ist es möglich, auch Veränderungen der Wünsche des Anwenders zu berücksichtigen, indem zur Bildung des Mittelwerts nur diejenigen Werte verwendet werden, die nicht länger als z. B. einen Monat oder eine beliebige andere Zeitdauer zurückliegen.

Auch die Nutzungsgewohnheiten des Anwenders bezüglich der Beschickungsmenge kann durch das Gargerät erkannt werden. Anhand der Lasterkennungen der verschiedenen Garprogramme wird z. B. erkannt, dass der Anwender häufig mit Vollbeschickungen gart. Dies kann beispielsweise dadurch bestimmt werden, dass nach der Beladung des Garraums die Garraumtemperatur sehr stark abfällt und das Gargerät eine lange Zeit benötigt, um den Garraum wieder auf die Soll-Garraumtemperatur zu heizen. Selbstverständlich ist es auch möglich, andere Sensoren zur Bestimmung der Last zu verwenden (Gewichtserkennung, Erkennung welche Einschübe verwendet werden oder ein optischer Sensor, mit dem die Beladung der Einschübe erkannt wird). Eine Anpassung der Garprogramme ist dann dahingehend sinnvoll, dass eine höhere Vorheiztemperatur bei der Anwahl dieser Garprogramme verwendet wird. Ebenso kann eine frühere Entfeuchtung, eine Anpassung der Restzeitberechnung oder eine Veränderung der Lüfterdrehzahl als Anpassung zweckmäßig sein.

Auch kann die Nutzungsgewohnheit des Anwenders bezüglich des verwendeten Zubehörs ausgewertet werden. Das in den Garraum eingebrachte Zubehör wird z. B. mit Hilfe von Strichcodes oder RIFD Chips erkannt, und die Häufigkeit der Verwendung bezogen auf die unterschiedlichen Garprogramme und die Zeitpunkte der Verwendung kann ausgewertet werden. Als Folge kann das Garprogramm angepasst werden, wenn bekannt ist, dass z. B. typischerweise für eine bestimmte Anwendung ein Katalysator in den Garraum eingebracht wird, um eine störende Rauchentwicklung und entstehende Gerüche zu reduzieren. Auch könnte eine Anpassung der Garzeit oder auch eine Anpassung der Reinigungschemie für einen anschließenden Reinigungsvorgang zweckmäßig sei. Wird bspw. stets ein stark Wärme übertragender Grill zur Erzeugung von Grillmustern auf dem Gargut im Garprogramm "Kurzgebratenes" verwendet, kann das Gargerät eine an die Grillroste angepasste Anfangstemperatur verwenden.

Wird beispielsweise erkannt, dass der Anwender typischerweise sehr lange zur Beladung des Garraums nach erfolgtem Vorheizen benötigt, kann es sinnvoll sein, die Vorheiztemperatur zu erhöhen, um die Energieverluste während der langen Türöffnungszeit während des Beladens auszugleichen. Ebenso kann die Vorheiztemperatur angepasst werden, wenn erkannt wird, dass der Anwender typischerweise mit bestimmten Kalibergrößen von Gargütern arbeitet. In diesem Fall kann auch die vom Anwender bevorzugte Größe des Garguts bei der Berechnung der Restzeit berücksichtigt werden. Verwendet der Anwender typischerweise sehr große Gargutdurchmesser, kann bei der Restzeitberechnung ein Korrekturfaktor verwendet werden, der dies berücksichtigt. Die vorausgesagte Restzeit wird dann länger als zuvor ausfallen, da das Gargerät mit Gargütern mit großen Durchmessern rechnet.

Als weiteres Kriterium für eine Nutzungsgewohnheit kann auch das häufige Abbrechen von Garprogrammen verwendet werden. Wird eine häufige Unterbrechung/Verkürzung der Garprogramme erkannt, weil die Garprogramme vorzeitig unterbrochen werden, gleichzeitig aber die Voreinstellungen des Garprogramms unverändert bleiben, können die entsprechenden Garparameter, z. B. eine Reduzierung der Garraumtemperatur oder eine Verkürzung der Garzeit vorgenommen werden.

Eine weitere Nutzungsgewohnheit des Anwenders kann die Garprogrammverlängerung sein. Wird nach den Garprogrammen mit manuellem Nachgaren eine zusätzliche/fehlende Gare des Garguts erzeugt, können die Garparameter daran angepasst werden, d. h. es erfolgt eine Erhöhung der Garraumtemperatur und/oder Verlängerung der Garzeit.

Sollten mehrere unterschiedliche Anwender mit dem gleichen Gargerät arbeiten, kann dies über die Eingabeeinrichtung eingegeben werden, um die Klassifizierung der Anwender zu vereinfachen. Jeder Anwender erhält dann eine bestimmte Kennung, die er über die Eingabeeinrichtung an das Gargerät überträgt, wenn er mit dem Gargerät arbeitet. Ebenso ist es natürlich möglich, in der Arbeitskleidung der Anwender RFID-Chips zu platzieren, die das Gargerät automatisch ausliest und erkennt, wenn sich der Anwender dem Gargerät nähert, insbesondere wenn Eingaben am Gargerät gemacht werden oder die Tür geöffnet, geschlossen oder bewegt wird. Eine entsprechende Eingabe durch den Anwender kann dann entfallen oder aber auch zusätzlich durchgeführt werden.

Anhand der verschiedenen Kriterien und Nutzungsgewohnheiten des Anwenders lassen sich die Anwender in spezifische Cluster gruppieren. Mit der Gruppierung der Anwendern (z. B. Hotels, Ketten, Gemeinschaftsverpflegung, Systemgastronomie) können die Kocheinstellungen und Garverläufe des Gargeräts zusätzlich automatisch angepasst werden.

Eine Gemeinschaftsverpflegung kann z. B. dadurch erkannt werden, dass häufig Vollbeschickungen verwendet werden (in mehr als 60% der Fälle), dass vorwiegend innere

Garparameter auf "durch" geändert werden (Korrektur der Einstellung bei über 80% der Fälle), dass selten die Anwahl des Garprogramms "Finishing à la carte" verwendet wird (weniger als 10% der Fälle), dass häufig klassische Garprogramme wie z. B. Nudeln in Soße oder Großbraten verwendet werden (in über 50% der Fälle), dass insgesamt wenig Durchmischung/Abwechslung der angewählten Programme/Garprogramme vorkommt (wenn 10 Programme mehr als 80% der insgesamt angewählten Programme betragen), wenn zumindest einmal täglich eine automatische Reinigung des Gargeräts durchgeführt wird, wenn keine Ruhetage vorkommen (Gerät wird an jedem Tag innerhalb von mindestens 3 Wochen verwendet), wenn feste Produktionszeiten verwendet werden (eine feste Anzahl von Betriebsstunden in Abhängigkeit von der Tageszeit lässt auf feste Arbeitszeiten und Betriebszeiten schließen), wenn regelmäßig HACCP-Daten herunter geladen werden, dass Zubehör wie Abzugshauben oder Katalysatoren nicht installiert sind (Ausschlusskriterium), und/oder wenn Standgeräte verwendet werden (bei Standgeräten reicht ein geringerer Stichprobenumfang zur Entscheidung, ob es sich um eine Gemeinschaftsverpflegung handelt). Erst durch die Verknüpfung aller oder mehrerer Ereignisse bei einem unterschiedlichen Stichprobenumfang je Ereignis kann eine ausreichende Erkennungssicherheit gewährleistet werden.

Als Folge können verschiedene Kocheinstellungen und Garprogramme angepasst werden, die für eine Gemeinschaftsverpflegung typisch sind. Z. B. können für die Soll-Kerntemperatur sehr hohe Werte eingestellt werden, da in der Gemeinschaftsverpflegung meist darauf geachtet wird, dass die Gargüter gut durchgegart sind. Die Defaultwerte für die Garprogramme werden also auf "durch" gestellt. Dies kann für ein einzelnes Garprogramm, verschiedene Garprogramme oder sogar auf alle Garprogramme übertragen werden. Ebenso wird angenommen, dass häufig Vollbeschickungen verwendet werden, so dass die Vorheiztemperatur der Garprogramme erhöht werden kann, da diese Einstellung für Vollbeschickungen geeigneter ist.

Neben den Nutzungsgewohnheiten und den daraus abgeleiteten Bedienkonzepten oder Garverläufen können über reale Messwerte bei Garvorgängen Plausibilitätsprüfungen hinsichtlich der Richtigkeit der Anpassung getroffen werden. Bestätigt ein Anwender beispielsweise immer die Option "Anbraten-Überspringen", kann diese Optionstaste ausgeblendet werden. Dies kann durch eine Plausibilitätsprüfung der Kerntemperatur wie folgt bestätigt werden: Steigt die Kerntemperatur schneller an bzw. existiert ein Temperaturprofil im Fleisch, direkt nachdem das Gargut in den Garraum eingebracht wurde, kann davon ausgegangen werden, dass das Gargut zuvor angebraten wurde. Wird ein Gassensor zur Überwachung der Garraumatmosphäre verwendet, kann erkannt werden, dass ein typischer Bratgeruch vorhanden ist, wenn das Gargut in den Garraum eingebracht wird. Das Ausblenden der Optionstaste hat sich dann also als richtig herausgestellt. Wird hingegen festgestellt, dass das Gargut nicht angebraten in den Garraum eingebracht wird, so kann der Anwender gefragt werden, ob er das Anbraten tatsächlich überspringen will und dann gegebenenfalls eine Korrektur dahingehend durchgeführt werden, dass die Option "Anbraten-Überspringen" beim nächsten Aufrufen des Garprogramms wieder erscheint.

Auch ist eine Anpassung des Bedienkonzepts/der Bedienoberfläche in Abhängigkeit von der Historie des Betriebs des Gargeräts möglich, wobei eine Clusterung/Gruppierung der Anwender nach Produktionsgewohnheiten, wie oben geschildert, verwendet wird.

Eine automatische Anpassung des Bedienkonzepts/der Bedienoberfläche erfolgt dann bspw. durch eine neue Sortierung und Umstrukturierung der Garprogrammauswahlmöglichkeiten. Für eine Gemeinschaftsverpflegung kann beispielsweise die Anwahl von klassischen Garprogrammen erleichtert werden, indem diese eine Menüebene nach oben verlegt werden.

Dies kann auch beim Erkennen von Anwendergewohnheiten bzw. einer Regelmäßigkeit im Verhalten bei Produktionsstart bzw. Produktionsende für eine Optimierung der Geräteeinstellung genutzt werden. Startet ein Anwender beispielsweise bei Produktionsbeginn immer mit der manuellen Betriebsart "Heißluft, 250° C" (Häufigkeit über 80%) so kann eine Positionsveränderung eben dieser manuellen Betriebsart bezüglich des Bedienmenüs durchgeführt werden (die Anwahlwege zur Auswahl dieser manuellen Betriebsart werden verkürzt). Es ist sogar denkbar, dass beim Anschalten des Gargeräts das Gargerät direkt in die Betriebsart "Heißluft, 250° C" springt.

Arbeitet der Anwender häufig mit automatischen Garprogrammen (Häufigkeit über 80%) kann die Bedienebene für die automatischen Garprogramme nach oben verlegt werden, oder auch nur einzelne häufig verwendete Garprogramme in die obere Bedienebene des Menüs verlegt werden.

Auch hinsichtlich der Anwahl und der Nutzung von Optionen bei Garprogrammen durch den Anwender kann eine Anpassung des Bedienkonzepts erfolgen. Wenn z. B. Optionen nie verwendet werden (z. B. im Garprogramm "Braten mit Kruste" wird die Option "Einschneiden

Überspringen" nie verwendet), können diese Anwahlmöglichkeiten ausgeblendet werden, um das Bedienkonzept/die Menüführung für den Anwender zu vereinfachen. Die entsprechenden Optionen werden in eine untere Ebene des Menüs verschoben werden, so dass sie noch stets erreichbar sind.

**In. Arbeitsprogrammklassifizierung**

Eine Verbesserung der Ergebnisse von Arbeitsprogrammen, wie bspw. Reinigungs- oder Garprogrammen, kann aus Sicht eines Anwenders auch dadurch erreicht werden, dass ein Gargerät aus dem Verhalten des Anwenders nach einem abgeschlossenen Garprogramm lernt.

Bricht der Anwender Garprogramme z. B. häufig oder immer kurz vor dem Erreichen des Endes des Garprogramms ab, so kann davon ausgegangen werden, dass der Anwender bei den von ihm gewählten Einstellungen ein geringeres Maß an Bräunung, Überkrustung oder einer anderen Form der Gare wünscht, als dies von dem automatischen Garprogramm veranschlagt wurde. Das Gargerät kann in solch einem Fall das entsprechende Garprogramm automatisch dahingehend anpassen, dass es auf eine geringere Bräunung, Überkrustung oder Gare ausgelegt ist. Bei einem nächsten Aufrufen des Garprogramms durch den Anwender erscheint dann auf einer Anzeigeeinrichtung z. B. "Garprogramm angepasst" und "Bräunung", "Krustierung" oder die betreffende Gare "wurde reduziert". Der Anwender kann daraufhin das modifizierte Garprogramm starten oder durch eine Eingabe die Modifizierung des Garprogramms ablehnen. Ebenso ist es vorstellbar, dem Anwender die Möglichkeit zu geben, die entsprechende Modifizierung zu verstärken oder abzuschwächen. So erscheint beispielsweise eine anwählbare Taste auf einem Touchscreen des Gargeräts auf der die Option "Standard" voreingestellt ist. Der Anwender kann durch Anwählen der Taste oder Eingabe an einer Eingabeeinrichtung des Gargeräts diese Voreinstellung auf "leicht", "gar nicht", "stark" oder "sehr stark" ändern und damit die Modifizierung des Garprogramms zusätzlich beeinflussen.

Der umgekehrte Fall ergibt sich, wenn nach dem Abschluss eines Garprogramms das Gargut nicht aus dem Garraum entfernt wird, sondern direkt nach Abschluss des Garprogramms eine zusätzliche Heißluftphase oder eine anderweitige Fortsetzung des Garprogramms durch den Anwender manuell eingestellt wird. Das fehlende Entfernen des Garguts aus dem Garraum kann dadurch erkannt werden, dass der Kerntemperaturfühler im Garraum verbleibt, d. h. die Temperaturen am Kerntemperaturfühler gleich bleiben, und/oder die Tür nicht oder zu kurz geöffnet wird, und/oder, wenn ein Sensor zur Überwachung des Zustands der Garraumatmosphäre im Gargerät vorhanden ist, erkannt wird, dass das eben gegarte Gargut im Garraum verblieben ist, weil immer noch Aromen des fertig gegarten Garguts in die Garraumatmosphäre entweichen. Ist dies einmal oder mehrere Male der Fall, kann das Garprogramm dahingehend angepasst werden, dass bei den gleichen Einstellungen des entsprechenden Garprogramms beim nächsten Aufruf durch den Anwender eine Verstärkung der Bräunung, Krustierung oder Gare voreingestellt wird. Der Anwender wird mit Hilfe der Anzeigeeinrichtung des Gargeräts über die Modifizierung des Garprogramms informiert, sobald er das Garprogramm aufruft. Er kann dann die Stärke der Modifizierung über die Eingabeeinrichtung bestimmen. Wurde bereits zuvor beispielsweise eine Verringerung der Bräunung bei den selben Einstellungen des Garprogramms durchgeführt, so fällt die Verstärkung anschließend entsprechend schwach aus, d. h. die Verstärkung wird entsprechend nach unten skaliert, so dass selbst bei einer sehr starken Modifizierung höchstens die ursprüngliche Grundeinstellung erreicht wird.

Auf der Basis der Eingabe bei den gegebenen Grundeinstellungen und dem ausgewählten Garprogramm kann darauf zurück geschlossen werden, ob derselbe Anwender bei bestimmten anderen Garprogrammen wohl ebenfalls eine ähnliche Modifizierung der Garprogramme wünschen würde. Dies kann bei einer Anwahl dieser anderen Garprogramme durch den Anwender anschließend berücksichtigt werden. Das heißt, dass neben dem ursprünglich modifizierten Garprogramm auch andere ähnliche Garprogramme, bei denen ein ähnlicher Wunsch des Anwenders zu erwarten ist, modifiziert werden.

Dazu können die Garprogramme und andere Arbeitsprogramme in Arbeitsprogrammklassen eingeordnet werden, bei denen die Änderung eines Programmes aus einer Klasse auch gleichzeitig die Änderung der Arbeitsprogramme in derselben Arbeitsprogrammklasse bewirkt. Je nach Strukturierung der Arbeitsprogrammklassen kann einer solchen aber auch nur ein einziges Arbeitsprogramm zugeordnet sein. In diesem Fall besteht die Arbeitsprogrammklasse nur aus einem einzelnen Arbeitsprogramm, z. B. einem bestimmten Garprogramm oder Reinigungsprogramm.

Die direkteste Möglichkeit die Wünsche des Anwenders zu erfahren, liegt jedoch darin, diese nach Abschluss eines Arbeitsprogramms direkt zu erfragen. Zu diesem Zweck zeigt das Gargerät nach Abschluss des Arbeitsprogramms auf der Anzeigeeinrichtung bspw. eine anwählbare Taste "Feedback". Wird diese Taste angewählt, erscheint ein Menü, bei dem der Anwender ein Feedback zu dem gerade abgelaufenen Arbeitsprogramm geben kann. Es ist auch möglich, das betreffende Arbeitsprogramm mit oder ohne eine Kennung zusammen mit dem Datum und der Uhrzeit und den Grundeinstellungen zu speichern, so dass der Anwender das Feedback auch zu einem späteren Zeitpunkt eingeben kann, indem er in einem speziellen Feedbackmenü des Gargeräts das bereits eine gewisse Zeit zurückliegenden Programm aufruft und das Feedback zu einem Zeitpunkt gibt, zu dem er dafür Zeit hat oder zu dem er das Gargerät für nichts anderes benötigt und/oder er die entsprechenden Informationen über ein Gargut hat. In dem Menü kann der Anwender z. B. angeben, womit er bei dem entsprechenden Programm zufrieden oder unzufrieden ist. Dazu bestätigt er, ob er mit dem Ergebnis und/oder dem Ressourcenaufwand des Programms zufrieden war. Falls das Programm an irgendeiner Stelle nicht zu seiner Zufriedenheit gearbeitet hat, erscheint ein Untermenü, das spezifischer darauf eingeht, womit der Anwender nicht zufrieden war. Ausgehend von Anwendereingaben werden Parameter der folgenden Programme angepasst, d. h. für den Anwender optimiert. Diese Anpassungen/Optimierungen werden für das jeweilige Programm gespeichert.

In begrenztem Umfang kann ein solches Feedback auch bei den Grundfunktionen des Gargeräts eingeholt werden. Das abgefragte Endergebnis kann somit ein Garergebnis, ein Reinigungsergebnis oder einen technischer Ablauf des Gargeräts selbst betreffen. So ist es beispielsweise möglich, den Anwender nach den Grundeinstellungen zur Umdrehungsgeschwindigkeit des Lüfterrads zu befragen. Ist der Anwender beispielsweise der Meinung, dass fünf voreingestellte Lüfterstufen sich im unteren Drehzahlbereich zu stark unterscheiden, ist es möglich, entweder eine zusätzlich Lüfterstufe im niedrigen Drehzahlbereich einzufügen oder die vorhandenen fünf Lüfterstufen so zu modifizieren, dass die mittleren Lüfterstufen zu niedrigeren Drehzahlen hin verschoben werden. Auch ist es möglich, ein Feedback zum Aufbau eines Menüs selbst einzuholen und z. B. ein Eingabemenü selbst zu modifizieren. Erwartet der Anwender beispielsweise unter dem Menü "Großbraten" eine Auswahloption für einen großen Putenbraten, so kann er dies als Feedback eingeben, und bei der nächsten Auswahl des Menüpunkts "Großbraten" erscheint als zusätzliche Option der Garprogramm "Putenbraten" oder "Geflügel", den der Anwender dann anwählen kann.

Garergebnisse können über einen äußeren und einen inneren Garparameter bewertet werden. Ein äußerer Garparameter ist charakteristisch für die Bräunung, die Gleichmäßigkeit der Bräunung, die Knusprigkeit, die Ausprägung der Kruste, das Volumen des gegarten Garguts, die Oberflächenausbildung des Garguts, also im Allgemeinen die Eigenschaften der Oberfläche des gegarten Garguts. Ein innerer Garparameter ist charakteristisch für den Gargrad, die Saftigkeit, die Porenstruktur, die Zartheit, die Konsistenz, also im Allgemeinen die Eigenschaften im Inneren des gegarten Garguts. Als Ressourcen kommen beim Garen die Garzeit, der Gewichtsverlust des Garguts, der Materialeinsatz an Gargütern, der Wasserverbrauch, der Energieverbrauch und der Gasverbrauch in Frage. Beim Reinigen sind neben dem Wasserverbrauch, dem Energieverbrauch und dem Gasverbrauch auch der Verbrauch an Reinigungsmaterialien sowie die Dauer des Garprogramms von Interesse. Zur Beurteilung eines Reinigungsergebnisses kommt selbstverständlich auch die Reinigungswirkung in Betracht. Dazu sind Eingaben des Anwenders zur Restschmutzfläche, Ausprägung des Restschmutzes, dem Glanz im Inneren des Gargeräts (Kalkschleier) und die Haftfestigkeit des Restschmutzes möglich.

Die Abfrage der Anwenderzufriedenheit kann im Allgemeinen manuell über die Eingabeeinrichtung des Gargeräts erfolgen. Ebenso ist es aber möglich, eine sprachgesteuerte Eingabe durchzuführen. Je nachdem, wie detailliert das Feedback des Anwenders ist, können nach der Eingabe unterschiedliche Maßnahmen ergriffen werden. Erhält man als Feedback lediglich die Eingabe "zufrieden" oder "nicht zufrieden", so stellt dies ein Minimum an Information für ein weiteres Vorgehen dar. In dem Fall einer Unzufriedenheit kann z. B. die Grundfunktionalität des Gargeräts überprüft werden. Hierzu kann das Gargerät eine Selbstdiagnose durchführen und/oder eine entsprechende Nachricht an einen Servicetechniker weiterleiten. Insbesondere dann, wenn nur ein geringes Feedback durch den Anwender eingegeben wird, kann auf zusätzliche Informationen, die sich aus dem Verhalten des Anwenders schließen lassen, zurückgegriffen werden. Wenn der Anwender beispielsweise nach dem Benutzen des Garprogramms "Kurzgebratenes" anschließend einen Heißluftbetrieb bei hohen Temperaturen einstellt, ohne das Gargut vorher aus dem Garraum zu entnehmen, so ist davon auszugehen, dass er sich eine stärkere Bräunung auf dem Gargut gewünscht hätte. Diese Informationen lassen sich dann wieder beim Aufruf des nächsten Garprogramms berücksichtigen. Ist der Anwender nach dem nächsten Durchführen des Garprogramms "Kurzgebratenes" zufrieden, so scheint die Veränderung des Garprogramms erfolgreich gewesen zu sein und wird beibehalten.

Präzisere Informationen lassen sich erhalten, indem eine Abfrage erfolgt, ob der Anwender mit den Einstellungen konkreter Parameter zufrieden war. Dies kann z. B. durch eine Auswahl über eine Skala erfolgen. Beim nächsten Aufruf eines Programms kann dann eine Korrektur der Parameter erfolgen. Falls die Ist-Einstellung und der Soll-Zustand innerhalb vorgegebener Parametergrenzen liegen, kann ein Abspeichern der neuen Parameter erfolgen. Falls der Soll-Zustand außerhalb der vorgegebenen Parametergrenzen liegt, kann, wenn der Zustand lediglich außerhalb der bisher verwendeten Skala liegt, eine Erweiterung der Parametergrenzen z. B. in Form einer stufenlosen Auswahl erfolgen. Liegt der Soll-Zustand außerhalb der Grenzen des durch das Gargerät Machbaren, so wird der Anwender darüber informiert, dass seine Wunscheinstellungen nicht möglich sind. Ebenso kann der Anwender eine Warnung erhalten, wenn er Soll-Zustände wünscht, die außerhalb der hygienischen Grenzen des jeweiligen Landes liegen. So ist es beispielsweise im europäischen Raum nicht üblich, bei Geflügel die Endkerntemperatur unterhalb von 72° C zu wählen, da ansonsten das Gargut aus europäischer Sicht hygienisch nicht einwandfrei ist.

Beispielsweise kann die Anwenderzufriedenheit bezüglich eines Grillmusters und/oder der Gardauer direkt nach dem Ablauf des Garprogramms "Grillen" wie folgt in fünf Stufen abgefragt werden:

Frage: "Wie sind Sie mit dem Grillmuster zufrieden?"

| | |
|---|---|
| Sehr gut ausgeprägt | = 1 |
| Gut ausgeprägt | = 2 |
| Noch befriedigend ausgeprägt | = 3 |
| Zu schwach ausgeprägt | = 4 |
| Nicht ausgeprägt | = 5 |

Frage: "Wie waren Sie mit der Gardauer zufrieden?"

| | |
|---|---|
| Garzeit verkürzen | = -1 |
| Garzeit in Ordnung | = 0 |
| Garzeit verlängern | = +1 |

Dabei kann entweder der Anwender selbst auswählen, welche Bewertung er durchführen möchte, oder es wird ihm eine Einzige oder eine Auswahl von Bewertungsmöglichkeiten dargeboten. Dies kann auch in Form eines Auswahlmenüs, z. B. geordnet nach innerem Garparameter und äußerem Garparameter, erfolgen. Je nach Auswahl und Eingabe des Anwenders wird dann eine Anpassung der Programme durchgeführt. Ist beispielsweise das Grillmuster "noch befriedigend" und die Garzeit "in Ordnung", wird die Garraumtemperatur um 20° C erhöht, oder, wenn sich die Garraumtemperatur nicht weiter erhöhen lässt, die Gardauer um 1 min erhöht. Ist beispielsweise die Bräunung (äußerer Parameter) gut und die Gare (innerer Garparameter) etwas zu durch, kann die Garraumtemperatur leicht erhöht werden, während die Gardauer etwas verringert oder der Kerntemperatursollwert etwas reduziert werden. Die mögliche Anpassung des Garraumklimas aufgrund der Eingabe durch den Anwender beim Garprogramm "Grillen" könnte beispielsweise wie in Tabelle 2 dargestellt ausfallen:

Tabelle 2: Veränderung des Garraumklimas beim Garprogramm "Grillen" aufgrund von Anwendereingabe

| Grillen | Temperatur | Feuchte | Gardauer | Lüftergeschwindigkeit |
|---------|-----------|---------|----------|----------------------|
| 1 | +0° C | +0% | +0 min | Bleibt |
| 2 | +0° C | +0% | +0,25 min | Bleibt |
| 3 | +10° C | -10% | +0,5 min | Bleibt |
| 4 | +15° C | -15% | +1 min | Höhere Stufe |
| 5 | +20° C | -20% | +2 min | Höhere Stufe |

Da der Anwender nach jedem Garprogramm erneut bewerten kann, nähern sich die Garprogramme immer mehr den Wunschvorstellungen des Anwenders. Um eine genauere Feineinstellung zu ermöglichen, kann die Schrittgröße (Garraumtemperatur, Feuchte, Gardauer, Kerntemperatursollwert, usw.) mit zunehmender Anzahl von Bewertungen reduziert werden.

Zielt die Abfrage darauf ab, ob der Anwender mit dem Ergebnis bzw. dem Ressourcenverbrauch zufrieden ist, so kann eine Anpassung aller möglichen Parameter hinsichtlich der Zielerreichung (Garprogrammablauf, Aktoren des Gargeräts, Reinigungsablauf, usw.) erfolgen.

Findet beispielsweise eine Abfrage nach einem beendeten Garprogramm über die Eingabeeinrichtung direkt am Gerät statt, die die Zufriedenheit des Anwenders z. B. mit der erreichten Bräunung des Garguts betrifft, so ist als Eingabemöglichkeit eine Skala des einzelnen Parameters in X Stufen, beispielsweise in fünf Stufen, denkbar. Als Abfrage zum äußeren Garparameter Bräunung kann dann beispielsweise die Frage erscheinen: "Wie würden Sie Ihr aktuelles Bräunungsergebnis einstufen" oder "Was ist Ihr Bräunungsziel?". Direkt darunter kann eine Anzeige mit fünf unterschiedlichen Farbfeldern erscheinen, auf denen die Bräunung als Helligkeitsverteilung oder in Echtfarbe angezeigt ist. Handelt es sich bei der Eingabeeinrichtung um einen Touchscreen, so kann die betreffende Farbe direkt ausgewählt werden. Ansonsten können über einen Rahmen, der das betreffende Feld umrandet, und mit Hilfe von Pfeiltasten oder einem Drehknopf auf der Bedieneinrichtung des Gargeräts die entsprechende Beurteilung des Garergebnisses und die Eingabe zum Bräunungsziel erfolgen.

Als Folge der Rückmeldung des Anwenders wird das folgende Garprogramm z. B. durch eine Veränderung der Garraumtemperatur und/oder der Garzeit angepasst. Dabei ist intern zu beachten, dass die weiteren abgefragten Parameter nicht maßgeblich verändert werden. Wenn eine Veränderung der weiteren Parameter unumgänglich ist, muss der Anwender im Vorfeld bzw. Nachgang darüber informiert werden. Dazu müssen die Informationen zu den möglichen Variablen mit dem Garprogramm verknüpft werden.

Ist der Anwender mit dem sensorischen Garergebnis zufrieden, erwartet jedoch eine kürzere Garzeit, kann er dieses Feedback im Rahmen einer Abfrage ebenfalls über eine Skala oder über direkte Zeiteingabe geben. Als Folge der Anwenderrückmeldung wird das folgende Garprogramm hinsichtlich der Betriebsart, Energieart, der Klimaparameter angepasst. So kann beispielsweise eine kürzere Mikrowellentaktung, d. h. eine höhere Mikrowellenleistung erfolgen.

Wenn z. B. gleichzeitig die Bräunung erhöht und die Gardauer verkürzt werden soll, muss sich die Garraumtemperatur besonders stark erhöhen. Da sich die verschiedenen Anwendereingaben gegenseitig beeinflussen können, wird bei den Veränderungen nach den zweiten und folgenden Anwendereingaben die der vorigen berücksichtigt. Der vom Anwender zuerst gewählte Parameter ist dabei führend, da anzunehmen ist, dass dieser Parameter aufgrund der Priorisierung bei der Eingabe für den Anwender der Wichtigste ist. Wählt der Anwender beispielsweise eine kürzere Gardauer und dies ist ohne negative Einflüsse auf andere Parameter (z. B. Gewichtsverlust) nicht möglich, so kann er nach der Eingabe darauf hingewiesen werden und dies bestätigen (5 min schneller - Gewichtsverlust um ca. 5% höher - ok?).

Ist ein Anwender beispielsweise mit einem Reinigungsergebnis zufrieden, bemängelt jedoch einen zu hohen Wasserverbrauch, so kann er auch dies im Rahmen der Abfrage ebenfalls über eine Skala oder über eine direkte Wassermengeneingabe mitteilen. Als Folge der Rückmeldung wird das folgende Reinigungsprogramm angepasst. Dabei ist im Rahmen des Sinnerschen Kreises, der aus dem Stand der Technik gut bekannt ist, z. B. eine Erhöhung der Reinigungszeit oder eine Erhöhung des Chemikalieneinsatzes denkbar. Diese Folgen, die daraus resultieren, dass der Wasserverbrauch reduziert wird, können dem Anwender mitgeteilt werden. So ist es auch möglich, den Anwender darüber entscheiden zu lassen, ob er zur Reduzierung der verbrauchten Wassermenge eine Erhöhung der Reinigungszeit oder eine Erhöhung des Chemikalieneinsatzes bevorzugen würde. Er kann dann eine der beiden Optionen auswählen oder auf die Reduzierung des Wasserverbrauchs verzichten.

Bei den Wunscheingaben des Anwenders sind verschiedene Szenarien denkbar:

1. Anpassung der Programme → Anwenderwunsch erfüllt → keine Auswirkungen auf weitere Parameter
2. Anpassung der Programme → Anwenderwunsch erfüllt → Auswirkung auf weitere Parameter → die Auswirkungen werden angezeigt oder verschwiegen (falls die Auswirkungen gezeigt werden, können diese mit einer Eingabe seitens des Anwenders bestätigt oder abgelehnt werden)
3. Anpassung der Programme zur Erfüllung des Anwenderwunschs nicht möglich → Anpassung soweit möglich → Aufzeigen der Grenzen

Der Vorteil der Anwenderabfrage liegt vor allem darin, dass ein Programm speziell und direkt auf die Anwenderwünsche angepasst bzw. dahingehend optimiert werden kann. Diese Erfahrungswerte werden im Gargerät abgespeichert und können durch den Vertrieb abgefragt werden. So können die Erfahrungswerte aus dem Markt für weitere Entwicklungen herangezogen werden. Auch ohne die Performance und deren Auswirkungen auf Ergebnisse beurteilen zu können, kann der Anwender entsprechend seiner Prioritäten Optimierungen vornehmen.

### III. Anwenderklassifizierung und Arbeitsprogrammklassifizierung

Wie bereits erwähnt, können einerseits Modifizierungen von Einstellungen von Arbeitsprogrammen von Gargeräten durch Anwender zur Klassifizierung/Clusterung der Anwender ausgewertet werden. Andererseits kann durch eine Klassifizierung/Clusterung der Anwender eine Modifizierung von Parametern von Arbeitsprogrammen automatisch durchgeführt werden. Es ist aber auch möglich, dass gleichzeitig eine Klassifizierung eines Anwenders automatisch und eine Klassifizierung eines Arbeitsprogramms durch einen Anwender stattfinden und in Abhängigkeit beider Klassifizierungen zukünftige Arbeitsprogramme verändert werden, Informationen auf einer Anzeigeeinrichtung eines Gargeräts oder an einem von dem Gargerät entfernten Ort, beispielsweise an einem Kontrollzentrum, angezeigt werden.

Somit wird erfindungsgemäß erstmals ein intelligentes Mensch-Maschinen-Interface bei Gargeräten bereitgestellt, was gleichzeitig zu einer Optimierung von Arbeitsprogrammen des Gargeräts führt, sei es hinsichtlich eines Garergebnisses, eines Reinigungsergebnisses, eines Ressourcenverbrauchs oder dergleichen. Dabei lässt sich bspw. von einem von der Anmelderin unter dem Handelsnamen SelfCooking Center® vertriebenen Kombidämpfer als Gargerät ausgehen, das mit den zuvor beschriebenen Funktionen zusätzlich ausgestattet wird, um zu solch einer Optimierung zu gelangen.

Die in der voranstehenden Beschreibung, sowie den Ansprüchen und Ausführungsbeispielen offenbarten Merkmale der Erfindung können sowohl einzeln als auch in jeder beliebigen Kombination für die Verwirklichung der Erfindung in ihren verschiedenen Ausführungsformen wesentlich sein.

### Patentansprüche

1. Verfahren zum Bereitstellen eines intelligenten Mensch-Maschinen-Interfaces bei Gargeräten, bei dem

- jeder Anwender mit einer Gewichtung in eine oder mehrere Anwenderklassen und/oder
jedes Arbeitsprogramm mit einer Gewichtung in eine oder mehrere Arbeitsprogrammklassen
unter Berücksichtigung zumindest einer Zeitinformation
eingeordnet werden kann, wobei
die zur Klasseneinordnung berücksichtigte Zeitinformation bestimmt wird aus einer Uhrzeit, einer Tageszeit, einer Jahreszeit, einem Datum, einer Pausenzeit und/oder einer Frequenz,
- zumindest eine Einstellung des Gargeräts geändert und/oder zumindest eine Information über das Gargerät eingestellt wird in Abhängigkeit von der Klasseneinordnung und der Gewichtung jeder Klasse, und
- bei einer Veränderung einer Einstellung zumindest einer Funktionseinheit des Gargeräts ein auf einer Anzeigeeinrichtung des Gargeräts angezeigtes Bedienmenü in Abhängigkeit von der Veränderung geändert wird.

2. Verfahren nach Anspruch 1, **dadurch gekennzeichnet, dass**
das Bedienmenü durch Weglassen von zumindest einer Information, Weglassen zumindest einer Eingabemöglichkeit, Hinzufügen zumindest einer anderen Information, Hinzufügen zumindest einer anderen Eingabemöglichkeit und/oder Umsortieren von Abläufen und/oder Informationen und/oder Eingabemöglichkeiten geändert wird.

3. Verfahren nach Anspruch 1 oder 2, **dadurch gekennzeichnet, dass** der Anwender mit einer Gewichtung für jede Anwenderklasse in eine oder mehrere Anwenderklassen eingeordnet werden kann und/oder jedes Arbeitsprogramm mit einer Gewichtung für jede Anwenderklasse in eine oder mehrere Arbeitsprogrammklassen eingeordnet werden kann.

4. Verfahren einem der vorangehenden Ansprüche, **dadurch gekennzeichnet, dass** die in Abhängigkeit von einer Klasseneinordnung ausgegebene Information eine Hilfeinformation und/oder eine Beurteilung des Betriebs zumindest einer der Funktionseinheiten des Gargeräts und/oder eine Beurteilung des Anwenders und/oder eine Beurteilung eines Garergebnisses, eines Reinigungsergebnisses und/oder verbrauchter Ressourcen umfasst.

5. Verfahren nach einem der vorangehenden Ansprüche, **dadurch gekennzeichnet, dass** die in Abhängigkeit von einer Klasseneinordnung ausgegebene Information zumindest einen Teil des Verlaufs zumindest einer Messgröße über die Zeit, insbesondere zu einem Garraumklima, einem Gargrad, einem Reinigungsgrad und/oder dem Einsparen von Ressourcen, wie Gas, Strom, Wasser, Reinigungsmittel, Zeit oder dergleichen, und/oder zumindest einen Teil des Ablaufs eines ausgewählten Arbeitsprogramms, insbesondere als Funktion der Zeit, wobei das Arbeitsprogramm als ein Garprogramm, ein Reinigungsprogramm, ein Diagnoseprogramm, ein Hilfefunktionsprogramm und/oder ein Betriebsartenprogramm ausgewählt wird umfasst.

6. Verfahren nach einem der vorangehenden Ansprüche, **dadurch gekennzeichnet, dass** die in Abhängigkeit von einer Klasseneinordnung ausgegebenen Information über die Anzeigeeinrichtung des Gargeräts oder eine vom Gargerät getrennten Anzeigeeinrichtung, wie in einem Kontrollzentrum, einer Wartungsstation, auf einer Fernbedienung oder dergleichen, angezeigt wird, wobei vorzugsweise die Anzeige in Form alphanumerischer Zeichen, Symbole und/oder graphisch stattfindet und/oder die angezeigte Information gespeichert und/oder ausgedruckt werden kann.

7. Verfahren nach einem der vorangehenden Ansprüche, **dadurch gekennzeichnet, dass** eine Vielzahl von Informationen gleichzeitig oder sich zumindest teilweise überlappend angezeigt wird.

8. Verfahren nach einem der vorangehenden Ansprüche, **dadurch gekennzeichnet, dass** zur Anwenderklasseneinordnung zumindest eine erste Größe, die für zumindest eine Einstellung des Gargeräts durch den Anwender charakteristisch ist,
zumindest eine zweite Größe, die für zumindest eine Änderung einer Einstellung des Gargeräts durch den Anwender charakteristisch ist, und/oder zumindest eine dritte Größe, die für die Zufriedenheit des Anwenders und/oder einer Überwachungsperson wie einem Servicetechniker, einem Kundenbetreuer, einem Gesundheitsinspektor, einem Küchenchef oder dergleichen, mit zumindest einem Arbeitsprogramm des Gargeräts charakteristisch ist, berücksichtigt wird bzw. werden.

9. Verfahren nach einem der vorangehenden Ansprüche, **dadurch gekennzeichnet, dass** zur Anwenderklasseneinordnung zumindest eine Eingabe an zumindest einer Eingabeeinrichtung für das Gargerät, zumindest eine durch die Auswertung von Ausgabedaten zumindest eines Sensors des Gargeräts bestimmte Handlung des Anwenders und/oder zumindest eine Bewegung von zumindest einem beweglichen Teil des Gargeräts berücksichtigt wird bzw. werden.

10. Verfahren nach Anspruch 9, **dadurch gekennzeichnet, dass**
die Eingabeeinrichtung als Bestandteil des Gargeräts, eines Computers, einer Fernbedienung und/oder eines Mobiltelefons ausgewählt wird, insbesondere für eine Eingabe durch Berührung und/oder Spracheingabe und/oder das bewegliche Teil als eine Tür, ein Deckel, ein Reinigungsmittelbehälter, ein Zubehör, wie ein Gargutträger, ein in Gargut einsteckbarer Garprozessfühler oder dergleichen, ein Gargutkonditionierer und/oder ein Sensor, Luftleitglied, ausgewählt wird.

11. Verfahren nach einem der vorangehenden Ansprüche, **dadurch gekennzeichnet, dass** die Einstellung des Gargeräts bestimmt wird aus der Einstellung zumindest einer Funktionseinheit des Gargeräts und/oder der Auswahl zumindest eines Arbeitsprogramms des Gargeräts.

**12.** Verfahren nach einem der vorangehenden Ansprüche, **dadurch gekennzeichnet, dass** die Funktionseinheit als zumindest eine Heizeinrichtung, eine Kühleinrichtung, eine Einrichtung zum Zuführen von Feuchtigkeit in einen Garraum, eine Einrichtung zum Abführen von Feuchtigkeit aus dem Garraum, eine Einrichtung zum Zuführen eines Gases in den Garraum, eine Einrichtung zum Beschwaden, eine Einrichtung zum Abführen eines Gases aus dem Garraum, eine Datenübertragungseinrichtung, die Anzeigeeinrichtung, eine Ausgabeeinrichtung, die Eingabeeinrichtung, eine Reinigungseinrichtung, eine Gebläseeinrichtung, eine Zirkulationseinrichtung, eine Sensiereinrichtung, eine Auswerteinrichtung, eine Speichereinrichtung, Beleuchtungseinrichtung, insbesondere für den Garraum, und/oder eine Steuer- oder Regeleinrichtung ausgewählt wird.

**13.** Verfahren nach einem der vorangehenden Ansprüche, **dadurch gekennzeichnet, dass** das Arbeitsprogramm als ein Garprogramm, ein Reinigungsprogramm, ein Diagnoseprogramm, ein Hilfefunktionsprogramm und/oder ein Betriebsartenprogramm ausgewählt wird.

**14.** Verfahren nach einem der vorangehenden Ansprüche , **dadurch gekennzeichnet, dass** die Zeitinformation über zumindest einen Zeitgeber, in einer Speichereinrichtung des Gargeräts oder außerhalb des Gargeräts hinterlegte Daten, eine mit dem Gargerät in Datentransferverbindung stehende Auswerteinrichtung, den Betrieb zumindest einer der Funktionseinheiten des Gargeräts über die Zeit und/oder die Einstellung einer Betriebsart, eines Soll-Garraumklimas, eines Soll-Gargrads, eines Soll-Reinigungsgrads und/oder eines Soll-Ressourcenverbrauchs über die Zeit bestimmt wird.

**15.** Verfahren nach Anspruch 13 oder 14, **dadurch gekennzeichnet, dass** die Zeitinformation bestimmt wird aus einem zeitlichen Verlauf, vorzugsweise ab erster In-Betrieb-Nahme des Gargeräts, ab letzter Ein-Schaltung des Gargeräts, ab letztem Aufruf zumindest eines Arbeitsprogramms, ab einer bestimmten Uhrzeit, Tageszeit und/oder Jahreszeit, innerhalb einer Saison und/oder innerhalb eines, insbesondere von dem Anwender und/oder der Überwachungsperson angegebenen Zeitraums.

**16.** Verfahren nach einem der vorangehenden Ansprüche, **dadurch gekennzeichnet, dass** die Zufriedenheit eines Anwenders und/oder einer Überwachungsperson, insbesondere automatisch, abgefragt wird, vorzugsweise nach Durchführung zumindest eines Teils eines Arbeitsprogramms, insbesondere direkt im Anschluss an das Arbeitsprogramm oder zu einem bestimmten späteren, vorzugsweise auswählbaren, Zeitpunkt, und/oder der Anwender und/oder die Überwachungsperson die Zufriedenheit mit dem Betrieb zumindest einer der Funktionseinheiten des Gargeräts und/oder der Durchführung eines der Arbeitsprogramme zu einem von ihm/ihr ausgewählten Zeitpunkt, insbesondere über die Eingabeeinrichtung, ein Intranet, das Internet und/oder drahtlos, eingeben kann.

**17.** Verfahren nach einem der vorangehenden Ansprüche, **dadurch gekennzeichnet, dass** bei einer Vielzahl von Anwendern jeder Anwender mit Hilfe zumindest eines Sensors, durch zumindest eine Eingabe an der Eingabeeinrichtung und/oder über die erste, zweite und/oder dritte Größe identifiziert wird.

**18.** Verfahren nach einem der vorangehenden Ansprüche, **dadurch gekennzeichnet, dass** zumindest ein Kriterium der Einordnung eines Anwenders in einer Anwenderklasse und/oder zumindest ein Kriterium der Einordnung eines Arbeitsprogramms in einer Arbeitsprogrammklasse geändert werden kann bzw. können, insbesondere von dem Anwender und/oder der Überwachungsperson, vorzugsweise über die Eingabeeinrichtung, ein Intranet, das Internet, ein Telefon und/oder drahtlos.

**19.** Verfahren nach Anspruch 18, **dadurch gekennzeichnet, dass** die erste, zweite und/oder dritte Größe geändert werden kann bzw. können, und/oder in Abhängigkeit einer benutzten Funktionseinheit und/oder eines benutzten Zubehörs und/oder durch Aufrufen eines bestimmten Arbeitsprogrammes, insbesondere Diagnoseprogramms, zumindest ein Klasseneinordnungskriterium, vorzugsweise als Funktion der Zeit, geändert werden kann.

**20.** Verfahren nach einem der vorangehenden Ansprüche, **dadurch gekennzeichnet, dass** zumindest eine Einstellung des Anwenders und/oder zumindest eine automatische Einstellung des Gargeräts bei Auswahl eines Arbeitsprogramms desselben durch den Anwender auf Plausibilität überprüft und/oder in Abhängigkeit von einer Klasseneinordnung verändert wird, vorzugsweise nach Durchführung eines bestimmten Arbeitsprogramms für zukünftige Durchführungen zumindest dieses Arbeitsprogramms.

**21.** Verfahren nach einem der vorangehenden Ansprüche, **dadurch gekennzeichnet, dass** bei Veränderung eines Arbeitsprogramms einer Arbeitsprogrammklasse auch alle weiteren Mitglieder dieser Arbeitsprogrammklasse verändert werden.

**22.** Verfahren nach einem der vorangehenden Ansprüche, **dadurch gekennzeichnet, dass** die Arbeitsprogrammklasseneinordnung in Abhängigkeit des Betriebs der beim Durchführen des entsprechenden Arbeitsprogramms involvierten Funktionseinheit(en) des Gargeräts, Betriebsart(en) des Gargeräts, eines Soll-Garraumklimas, eines Soll-Gargrads, einen Soll-Reinigungsgrads und/oder eines Soll-Ressourcenverbrauchs durchgeführt wird.

**23.** Verfahren nach einem der vorangehenden Ansprüche, **dadurch gekennzeichnet, dass** zumindest eine in Abhängigkeit einer Klasseneinordnung vorgenommene Veränderung der Einstellung des Gargeräts und/oder Ausgabe einer Information automatisch durchgeführt wird, nach Bestätigung der automatisch vorgeschlagenen Veränderung durchgeführt wird, und/oder nach Abfrage der vorgeschlagenen Veränderung durchgeführt wird, wobei vorzugsweise die vorgeschlagene Änderung von dem Anwender und/oder der Überwachungsperson verändert werden kann.

**24.** Gargerät mit einer Steuer- und/oder Regeleinrichtung zum Durchführen eines Verfahrens nach einem der vorangehenden Ansprüche.

**Claims**

**1.** A method for providing an intelligent man-machine interface in cooking appliances, in which

- each user can be placed in one or several user classes with a weighting
and/or
each work programme can be placed in one or several work programme classes with a weighting
considering at least one time information, wherein
the time information considered for classification is determined from a time, a time of the day, a time of the year, a date, a pause time and/or a frequency,
- at least one adjustment of the cooking equipment is modified and/or
at least one information is adjusted by way of the cooking appliance depending on the classification and the weighting of each class, and
- when changing an adjustment of at least one functional unit of the cooking appliance, an operating menu displayed on a display device of the cooking appliance is modified depending on the change.

**2.** A method according to claim 1, **characterized in that**
the operating menu is modified by omitting at least one information, omitting at least one input option, adding at least one other information, adding at least one other input option and/or re-sorting of sequences and/or information and/or input options.

**3.** A method according to claim 1 or 2, **characterized in that**
the user can be placed in one or several user classes with a weighting for each user class, and/or
each work programme can be placed in one or several work programme classes with a weighting for each user class.

**4.** A method according to any one of the preceding claims, **characterized in that** the information output depending on a classification comprises a help information and/or an assessment of the operation of at least one of the functional units of the cooking appliance and/or an assessment of the user and/or an assessment of a cooking result, a cleaning result and/or resources consumed.

**5.** A method according to any one of the preceding claims, **characterized in that** the information output depending on a classification comprises at least part of the course of at least one measured quantity over time, in particular of a cooking chamber climate, a cooking degree, a cleaning degree and/or the saving of resources such as gas, power, water, cleaning agents, time or the like, and/or at least part of the course of a selected work programme, in particular as a function of time, wherein the work programme is selected as a cooking programme, a cleaning programme, a diagnostic programme, a help function programme and/or an operating mode programme.

**6.** A method according to any one of the preceding claims, **characterized in that** the information output depending on a classification is displayed by way of the display device of the cooking appliance or a display device separate from the cooking appliance such as a control centre, a maintenance station, on a remote control or the like, wherein preferably the display occurs in the form of alphanumeric signs, symbols and/or graphically and/or the displayed information can be stored and/or printed.

7.  A method according to any one of the preceding claims, **characterized in that** a multitude of information is displayed simultaneously or at least partly overlapping.

8.  A method according to any one of the preceding claims, **characterized in that**,
    for user classification, at least one first quantity which is characteristic for at least one adjustment of the cooking appliance by the user,
    at least one second quantity which is characteristic for at least one modification of an adjustment of the cooking appliance by the user, and/or
    at least one third quantity which is characteristic for the satisfaction of the user and/or a supervisor such as a service technician, a customer advisor, a health inspector, a chef or the like, with at least one work programme of the cooking appliance, is or are considered.

9.  A method according to any one of the preceding claims, **characterized in that**,
    for user classification, at least one input in at least one input device for the cooking appliance, at least one act of the user determined by the analysis of output data of at least one sensor of the cooking appliance and/or at least one movement of at least one movable part of the cooking appliance is or are considered.

10. A method according to claim 9, **characterized in that**
    the input device is selected as a component of the cooking appliance, a computer, a remote control and/or a mobile telephone, in particular for input by touching and/or speech input, and/or
    the movable part is selected as a door, a lid, a cleaning agent container, an accessory such as a carrier for food to be cooked, a cooking process probe insertable into food to be cooked, or the like, a conditioner for food to be cooked and/or a sensor, and an air conducting member.

11. A method according to any one of the preceding claims, **characterized in that** the adjustment of the cooking appliance is determined from the adjustment of at least one functional unit of the cooking appliance and/or the selection of at least one work programme of the cooking appliance.

12. A method according to any one of the preceding claims, **characterized in that** the functional unit is selected as at least one heating device, one cooling device, one device for feeding moisture into a cooking chamber, a device for removing moisture from the cooking chamber, a device for feeding a gas into the cooking chamber, a device for steaming, a device for removing a gas from the cooking chamber, a data transmission device, the display device, an output device, the input device, a cleaning device, a blow device, a circulation device, a sensing device, an analysing device, a storing device, a lighting device, in particular for the cooking chamber, and/or a control device.

13. A method according to any one of the preceding claims, **characterized in that** the work programme is selected as a cooking programme, a cleaning programme, a diagnostic programme, a help function programme and/or an operating mode programme.

14. A method according to any one of the preceding claims, **characterized in that** the time information is determined by way of at least one timer, data deposited in a storing device of the cooking appliance or outside the cooking appliance, an analysing device in data exchange connection with the cooking appliance, the operation of at least one of the functional units of the cooking appliance over time and/or the adjustment of an operating mode, a required cooking chamber climate, a required cooking degree, a required cleaning degree and/ore a required resource consumption over the time.

15. A method according to claim 13 or 14, **characterized in that** the time information is determined from a time course, preferably from the initial start-up of the cooking appliance, from the last switching on of the cooking appliance, from the last start of at least one work programme, from a particular time, time of the day and/or time of the year, within a season and/or within a period, in particular specified by the user and/or the supervisor.

16. A method according to any one of the preceding claims, **characterized in that** the satisfaction of a user and/or a supervisor is inquired, in particular automatically, preferably after executing at least part of the work programme, in particular directly following the work programme, or at a particular later, preferably selectable, point in time, and/or the user and/or the supervisor can input satisfaction with the operation of at least one of the functional units of the cooking appliance and/or with the execution of one of the work programmes at a point in time selected by him/her, in particular by way of the input device, an intranet, the Internet and/or wirelessly.

**17.** A method according to any one of the preceding claims, **characterized in that**, for a multitude of users, each user is identified with the help of at least one sensor, by at least one input at the input device and/ore by way of the first, second and/or third quantity.

**18.** A method according to any one of the preceding claims, **characterized in that** at least one criterion for placing a user in a user class and/or at least one criterion for placing a work programme in a work programme class can be modified, in particular by the user and/or the supervisor, preferably by way of the input device, an intranet, the Internet, a telephone and/or wirelessly.

**19.** A method according to claim 18, **characterized in that** the first, second and/or third quantity can be modified, and/or at least one classification criterion can be modified, preferably as a function of time, depending on a used functional unit and/or a used accessory and/or by calling a particular work programme, in particular a diagnostic programme.

**20.** A method according to any one of the preceding claims, **characterized in that**, when a work programme of the cooking appliance is selected by the user, at least one adjustment of the user and/or at least one automatic adjustment of the cooking equipment is checked for plausibility and/or modified depending on a classification, preferably after executing a particular work programme for future executions of at least that work programme.

**21.** A method according to any one of the preceding claims, **characterized in that**, when changing a work programme of a work programme class, all other members of that work programme class are also changed.

**22.** A method according to any one of the preceding claims, **characterized in that** the work programme classification is carried out depending on the operation of the functional unit(s) of the cooking equipment involved in the execution of the relevant work programme, the operating mode(s) of the cooking equipment, a required cooking chamber climate, a required cooking degree, a required cleaning degree and/or a required resource consumption.

**23.** A method according to any one of the preceding claims, **characterized in that** at least one change of the adjustment of the cooking equipment and/or output of information made depending on a classification is carried out automatically after confirmation of the automatically proposed change, and/or is carried out after inquiry of the proposed change, wherein preferably the proposed modification can be changed by the user and/or the supervisor.

**24.** A cooking equipment with a control device for carrying out a method according to any one of the preceding claims.

## Revendications

**1.** Procédé pour fournir une interface homme-machine intelligente dans des dispositifs de cuisson, **caractérisé en ce que**
chaque utilisateur peut être classé au moyen d'une évaluation dans une ou plusieurs catégories d'utilisateurs, et/ou chaque programme de travail peut être classé au moyen d'une évaluation dans une ou plusieurs catégories de programmes de travail
en prenant en considération au moins une information de temps, de sorte que l'information de temps prise en compte pour un classement dans une catégorie va être déterminée parmi une heure, un jour, une année, une date, un temps de pause et/ou une fréquence,

- au moins un réglage du dispositif de cuisson va être changé, et/ou
- au moins une information va être établie sur le dispositif de cuisson, selon le classement dans une catégorie et l'évaluation de chaque catégorie, et
- lors du changement d'un réglage d'au moins une unité fonctionnelle du dispositif de cuisson, un menu d'utilisation affiché sur un dispositif d'affichage du dispositif de cuisson va être modifié selon le changement.

**2.** Procédé selon la revendication 1, **caractérisé en ce que** le menu d'utilisation va être modifié par abandon d'au moins une information, abandon d'au moins une option d'entrée, ajout d'au moins une autre information, ajout d'au moins une autre option d'entrée et/ou réagencement de processus et/ou informations et/ou options d'entrée.

**3.** Procédé selon la revendication 1 ou 2, caractérisé ce que l'utilisateur peut être classé, au moyen d'une évaluation pour chaque catégorie d'utilisateurs, dans une ou plusieurs catégories d'utilisateurs, et/ou
chaque programme de travail peut être classé, au moyen d'une évaluation pour chaque catégorie d'utilisateurs, dans une ou plusieurs catégories de programmes de travail.

**4.** Procédé selon l'une quelconque des revendications précédentes, **caractérisé en ce que** l'information émise en fonction d'un classement dans une catégorie comporte une information d'aide et/ou une estimation du fonctionnement d'au moins une des unités fonctionnelles du dispositif de cuisson et/ou une estimation de l'utilisateur et/ou une estimation d'un résultat de cuisson, d'un résultat de nettoyage et/ou des ressources consommées.

**5.** Procédé selon l'une quelconque des revendications précédentes, **caractérisé en ce que** l'information émise en fonction d'un classement dans une catégorie comporte au moins une partie de l'évolution au cours du temps, d'au moins une variable mesurée en particulier parmi un climat de chambre de cuisson, un degré de cuisson, un degré de nettoyage et/ ou l'économie de ressources comme le gaz, l'électricité, l'eau, le produit de nettoyage, le temps ou analogues, et/ou au moins une partie du déroulement d'un programme de travail sélectionné, en particulier en fonction du temps, de sorte que le programme de travail est sélectionné en tant que programme de cuisson, programme de nettoyage, programme de diagnostic, programme de fonction d'aide et/ou programme de mode de fonctionnement.

**6.** Procédé selon l'une quelconque des revendications précédentes, **caractérisé en ce que** l'information émise en fonction d'un classement dans une catégorie va être affichée sur le dispositif d'affichage du dispositif de cuisson ou un dispositif d'affichage séparé du dispositif de cuisson, comme dans un centre de commande, un poste d'entretien, sur une télécommande ou analogues, de sorte que de préférence l'affichage va prendre la forme de caractères alphanumériques, de symboles et/ou une forme graphique, et/ou l'information affichée peut être affichée et/ou imprimée.

**7.** Procédé selon l'une quelconque des revendications précédentes, **caractérisé en ce qu'**une multitude d'informations vont être affichées en même temps, ou au moins partiellement en chevauchement.

**8.** Procédé selon l'une quelconque des revendications précédentes, **caractérisé en ce que** pour un classement dans une catégorie d'utilisateurs, au moins une première variable va être prise en compte, qui est caractéristique d'au moins un réglage du dispositif de cuisson par l'utilisateur, et/ou
au moins une deuxième variable, qui est caractéristique d'au moins une modification d'un réglage du dispositif de cuisson de la part de l'utilisateur, et/ou au moins une troisième variable, qui est caractéristique du sentiment de satisfaction de l'utilisateur et/ou d'une personne chargée de la surveillance comme un technicien de maintenance, un chargé de clientèle, un inspecteur sanitaire, un chef de cuisine ou analogues, en ce qui concerne au moins un programme de travail du dispositif de cuisson.

**9.** Procédé selon l'une quelconque des revendications précédentes, **caractérisé en ce que** pour un classement dans une catégorie d'utilisateurs, au moins une entrée sur au moins un dispositif d'entrée du dispositif de cuisson, au moins une action de l'utilisateur déterminée par l'évaluation de données de sortie d'au moins un capteur du dispositif de cuisson et/ou au moins un déplacement d'au moins une pièce mobile du dispositif de cuisson est/vont être déterminé(e)s.

**10.** Procédé selon la revendication 9, **caractérisé en ce que** le dispositif d'entrée va être choisi en tant que composant du dispositif de cuisson, d'un ordinateur, d'une télécommande et/ou d'un téléphone mobile, en particulier pour une entrée tactile et/ou vocale, et/ou
la pièce mobile va être choisie parmi une porte, un couvercle, un réservoir d'agent de nettoyage, un accessoire, comme un support d'aliment à cuire, une sonde pouvant être introduite dans un aliment à cuire ou analogues, un dispositif de conditionnement d'aliment à cuire et/ou un capteur, et un élément de guidage d'air.

**11.** Procédé selon l'une quelconque des revendications précédentes, **caractérisé en ce que** le réglage du dispositif de cuisson va être déterminé d'après le réglage d'un moins une unité fonctionnelle du dispositif de cuisson et/ou le choix d'au moins un programme de travail du dispositif de cuisson.

**12.** Procédé selon l'une quelconque des revendications précédentes, **caractérisé en ce que** l'unité fonctionnelle va être choisie parmi au moins un dispositif chauffant, un dispositif de refroidissement, un dispositif pour alimenter de l'humidité dans une chambre de cuisson, un dispositif pour enlever de l'humidité de la chambre de cuisson, un dispositif pour alimenter un gaz dans la chambre de cuisson, un dispositif de vaporisation, un dispositif pour enlever un gaz de la chambre de cuisson, un dispositif de transmission de données, le dispositif d'affichage, un dispositif de sortie, le dispositif d'entrée, un dispositif de nettoyage, un dispositif de ventilation, un dispositif de circulation, un dispositif de détection, un dispositif d'évaluation, un dispositif de sauvegarde, un dispositif d'éclairage, en particulier pour la chambre de cuisson, et/ou un dispositif de commande et/ou de régulation.

13. Procédé selon l'une quelconque des revendications précédentes, **caractérisé en ce que** le programme de travail va être choisi parmi un programme de cuisson, un programme de nettoyage, un programme de diagnostic, un programme de fonction d'aide et/ou un programme de mode de fonctionnement.

14. Procédé selon l'une quelconque des revendications précédentes, **caractérisé en ce que** l'information de temps va être déterminée via au moins un minuteur, dans un dispositif mémoire du dispositif de cuisson ou des données sauvegardées à l'extérieur du dispositif de cuisson, un dispositif d'évaluation externe relié au dispositif de cuisson pour des transferts de données, le fonctionnement d'au moins une des unités fonctionnelles du dispositif de cuisson au cours du temps et/ou le réglage d'un mode de fonctionnement, d'un climat de chambre de cuisson cible, d'un degré de cuisson cible, d'un degré de nettoyage cible et/ou d'une consommation de ressources cible.

15. Procédé selon les revendications 13 ou 14, **caractérisé en ce que** l'information de temps va être déterminée à partir d'un déroulement dans le temps, de préférence à partir de la première mise en service du dispositif de cuisson, à partir du dernier allumage du dispositif de cuisson, à partir du dernier appel à au moins un programme de travail, à partir d'une heure, d'un jour et/ou d'une année déterminée, durant une saison et/ou durant un laps de temps donné, en particulier par l'utilisateur et/ou la personne chargée de la surveillance.

16. Procédé selon l'une quelconque des revendications précédentes, **caractérisé en ce que** la satisfaction d'un utilisateur et/ou d'une personne chargée de la surveillance va être interrogée, en particulier automatiquement, de préférence après mise en oeuvre d'au moins une partie d'un programme de travail, en particulier directement après la mise en service du programme de travail ou après un instant déterminé ultérieur pouvant de préférence être sélectionné, et/ou la satisfaction de l'utilisateur et/ou de la personne chargée de la surveillance peut être donnée par rapport au fonctionnement d'au moins une des unités fonctionnelles du dispositif de cuisson, et/ou au déroulement d'un des programmes de travail jusqu'à son instant sélectionné, en particulier via le dispositif d'entrée, un intranet, l'Internet et/ou sans fil.

17. Procédé selon l'une quelconque des revendications précédentes, **caractérisé en ce que** chaque utilisateur d'une multitude d'utilisateurs va être identifié à l'aide d'au moins un capteur, au moyen d'au moins une entrée sur le dispositif d'entrée, et/ou à l'aide de la première, deuxième ou troisième variable.

18. Procédé selon l'une quelconque des revendications précédentes, **caractérisé en ce qu'**au moins un critère du classement d'un utilisateur dans une catégorie d'utilisateurs et/ou au moins un critère du classement du programme de travail dans une catégorie de programmes de travail peut/peuvent être modifiés, en particulier par l'utilisateur et/ou la personne chargée de la surveillance, de préférence via le dispositif d'entrée, un Intranet, l'internet, un téléphone et/ou sans fil.

19. Procédé selon la revendication 18, **caractérisé en ce que** la première, deuxième et/ou troisième variable peut/peuvent être modifiées, et/ou en fonction d'une unité fonctionnelle utilisée et/ou d'un accessoire utilisé et/ou en faisant appel à un programme de travail déterminé, en particulier un programme de diagnostic, au moins un critère de classement dans une catégorie peut être modifié, de préférence en fonction du temps.

20. Procédé selon l'une quelconque des revendications précédentes, **caractérisé en ce qu'**au moins un réglage de la part de l'utilisateur et/ou au moins un réglage automatique du dispositif de cuisson va être modifié par le choix d'un programme de travail et du contrôle de son caractère plausible par le même utilisateur et/ou selon un classement dans une catégorie, de préférence après mise en oeuvre d'un programme de travail déterminé, pour des mises en oeuvre futures d'au moins ce programme de travail.

21. Procédé selon l'une quelconque des revendications précédentes, **caractérisé en ce qu'**en modifiant un programme de travail d'une catégorie de programmes de travail, tous les autres éléments de cette catégorie de programmes de travail vont être modifiés.

22. Procédé selon l'une quelconque des revendications précédentes, **caractérisé en ce que** le classement dans une catégorie de programmes de travail va être effectué selon le fonctionnement de la ou des unités fonctionnelles du dispositif de cuisson impliquées par le déroulement du programme de travail correspondant, le ou les modes de fonctionnement du dispositif de cuisson, un climat de chambre de cuisson cible, un degré de cuisson cible, un degré de nettoyage cible et/ou une consommation de ressources cible.

23. Procédé selon l'une quelconque des revendications précédentes, **caractérisé en ce qu'**au moins une modification du réglage du dispositif de cuisson, effectuée selon un classement dans une catégorie, va être mise en oeuvre automatiquement, et/ou la sortie d'une information va être mise en oeuvre automatiquement après confirmation de la modification proposée de manière automatique, et/ou après interrogation de la modification proposée, de sorte que de préférence la modification proposée par l'utilisateur et/ou la personne chargée de la surveillance peut être modifiée.

24. Dispositif de cuisson comportant un dispositif de commande et de régulation pour mettre en oeuvre un procédé selon l'une quelconque des revendications précédentes.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10300465 A1
- EP 1758000 A1
- EP 0285056 B1
- EP 1605730 A1
- WO 2007027621 A1
- DE 10103948 A1
- US 7057142 B1
- WO 0112039 A2
- US 5875430 A
- US 6400996 B1
- EP 1528464 A2
- EP 1624689 A1